(19) **Europäisches Patentamt / European Patent Office / Office européen des brevets**

(11) **EP 4 589 490 B1**

(12) **EUROPEAN PATENT SPECIFICATION**

(45) Date of publication and mention
of the grant of the patent:
**25.03.2026 Bulletin 2026/13**

(51) International Patent Classification (IPC):
***G06N 10/70*** *(2022.01)*

(52) Cooperative Patent Classification (CPC):
**G06N 10/70**

(21) Application number: **24215952.3**

(22) Date of filing: **27.11.2024**

(54) **COMPUTER PROGRAM, QUANTUM OPERATION EVALUATION METHOD, AND INFORMATION PROCESSING APPARATUS**

COMPUTERPROGRAMM, QUANTENBETRIEBSBEWERTUNGSVERFAHREN UND INFORMATIONSVERARBEITUNGSVORRICHTUNG

PROGRAMME INFORMATIQUE, PROCÉDÉ D'ÉVALUATION D'OPÉRATION QUANTIQUE ET APPAREIL DE TRAITEMENT D'INFORMATIONS

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **19.01.2024 JP 2024006570**

(43) Date of publication of application:
**23.07.2025 Bulletin 2025/30**

(73) Proprietor: **FUJITSU LIMITED
Kawasaki-shi, Kanagawa 211-8588 (JP)**

(72) Inventor: **SUGIYAMA, Takanori
Kawasaki-shi, 211-8588 (JP)**

(74) Representative: **Haseltine Lake Kempner LLP
Cheapside House
138 Cheapside
London EC2V 6BJ (GB)**

(56) References cited:
• **TAKANORI SUGIYAMA ET AL: "Reliable Characterization for Improving and Validating Accurate Quantum Operations", ARXIV.ORG, CORNELL UNIVERSITY LIBRARY, 201 OLIN LIBRARY CORNELL UNIVERSITY ITHACA, NY 14853, 30 December 2020 (2020-12-30), XP081847820**
• **HE-LIANG HUANG ET AL: "Near-Term Quantum Computing Techniques: Variational Quantum Algorithms, Error Mitigation, Circuit Compilation, Benchmarking and Classical Simulation", ARXIV.ORG, CORNELL UNIVERSITY LIBRARY, 201 OLIN LIBRARY CORNELL UNIVERSITY ITHACA, NY 14853, 27 December 2022 (2022-12-27), XP091403006**
• **TAKANORI SUGIYAMA: "Robust Lindbladian Tomography for Cyclic Quantum Gates", ARXIV.ORG, CORNELL UNIVERSITY LIBRARY, 201 OLIN LIBRARY CORNELL UNIVERSITY ITHACA, NY 14853, 16 March 2025 (2025-03-16), XP091961026**

**Description**

FIELD

The embodiments discussed herein relate to a computer program, a quantum operation evaluation method, and an information processing apparatus.

BACKGROUND

A quantum gate-type quantum computer executes a variety of quantum operations on qubits. The quantum computer initializes the qubits, applies quantum gates to the qubits, and measures the values of the qubits. Quantum computers are implemented on physical platforms based on superconducting quantum circuits, semiconductor quantum dots, diamond nitrogen-vacancy (NV) centers, nuclear magnetic resonance (NMR) molecules, and others.

In general, an implemented quantum computer has errors that are deviations in the actions of quantum operations from the ideal actions. A user may evaluate the errors in the quantum operations, and perform a calibration to adjust the values of control parameters within the quantum computer, on the basis of the evaluation result. For example, the quantum computer may have control parameters for adjusting the duration, amplitude, waveform, and others of drive pulses to be applied to qubits. Adjusting the values of the control parameters may improve the accuracy of the quantum operations.

Since the measurement values of qubits are obtained after plural types of quantum operations are performed on the qubits, it is not easy to directly evaluate the error in each individual quantum operation. Quantum tomography is one of techniques used to estimate errors in quantum operations. The quantum tomography conducts an experiment that involves repeatedly obtaining measurement values from a quantum computer while changing the combination of quantum operations. The quantum tomography then analyzes the experimental data to estimate the error in each individual quantum operation.

In this connection, there has been proposed a quantum error correction method of measuring the values of qubits to determine an error rate and calculating a change in the error rate caused by changes in the parameter values of quantum gates. Further, there has been proposed a quantum tomography system that causes a quantum processor to conduct tomography experiments using a quantum circuit and analyzes the experimental result data with a tomography analysis algorithm. Still further, there has been proposed a quantum computing device that performs phase arithmetic using linear combinations of a plurality of unitaries.

Still further, there has been proposed a method for evaluating a quantum gate, which derives a Lindblad equation satisfied by qubits and calculates a quantum gate error rate. Still further, there has been proposed a superconducting quantum chip that determines a distortion of a frequency control signal of a qubit using a quantum state tomography and adjusts the frequency control signal. Still further, there has been proposed a quantum circuit generation device that generates a pre-amplitude amplification circuit on a certain quantum circuit. Still further, there has been proposed a quantum computational system that includes normal qubits and ancilla qubits, a quantum gate that configures the ancilla qubits into a known state, and a measurement circuit that measures the values of the normal qubits using the ancilla qubits.

U.S Patent Application Publication No. 2018/0330265
International Publication Pamphlet No. WO 2019/064057
U.S Patent Application Publication No. 2019/0220497
Japanese Laid-open Patent Publication No. 2021-106013
International Publication Pamphlet No. WO 2022/073380
International Publication Pamphlet No. WO 2023/089930
U.S Patent Application Publication No. 2023/0205840

In order to evaluate the errors of quantum gates, the quantum tomography may use a quantum circuit including an error amplification circuit in which the same sequence of quantum gates is repeated. The error amplification circuit amplifies very small errors of the quantum gates so as to make the error components included in measurement values more visible, which contributes to improving the reliability of the evaluation result. However, since the error amplification circuit has a nonlinear amplification action amplification circuit has a nonlinear amplification action on the errors, the data analysis may be complicated. As a result, the data analysis may have a high computational load, and thus the numerical stability of evaluation results may be low.

If, for example, the amplification action of the error amplification circuit is approximated by a linear function, singularities at which problematic values such as infinity are calculated may appear with respect to some quantum gates in the search space. In this case, it is difficult to evaluate the errors of such quantum gates with a simple approximation method.

TAKANORI SUGIYAMA ET AL: "Reliable Characterization for Improving and Validating Accurate Quantum Operations", ARXIV.ORG, CORNELL UNIVERSITY LIBRARY, 201 OLIN LIBRARY CORNELL UNIVERSITY ITHACA, NY 14853, 30 December 2020 (2020-12-30)relates to a method for characterizing quantum operations that is suitable for improving and validating their accuracies.

HE-LIANG HUANG ET AL: "Near-Term Quantum Computing Techniques: Variational Quantum Algorithms, Error Mitigation, Circuit Compilation, Benchmarking and Classical Simulation", ARXIV.ORG, CORNELL UNIVERSITY LIBRARY, 201 OLIN LIBRARY CORNELL UNIVERSITY ITHACA, NY 14853, 27 December 2022 (2022-12-27) relates to a review which provide an introduction of near-term quantum computing techniques, report on their progress, and finally discuss the future prospect of these techniques.

SUMMARY

It is desirable to streamline the evaluation of errors of quantum gates. The present invention is defined in the independent claims, to which reference should now be made. Specific embodiments are set out in the dependent claims.

According to one aspect, there is provided a computer program in accordance with independent claim 1.

According to another aspect, there is provided a method in accordance with independent claim 6.

According to yet another aspect, there is provided an apparatus in accordance with independent claim 7.

Further preferable aspects are provided in accordance with the dependent claims.

BRIEF DESCRIPTION OF DRAWINGS

The invention is described, by way of example only, with reference to the following drawings, in which:

FIG. 1 is a view for describing an information processing apparatus according to a first embodiment;
FIG. 2 illustrates an example of the hardware configuration of an information processing apparatus according to a second embodiment;
FIG. 3 illustrates an example of an evaluation quantum circuit including an error amplification circuit;
FIG. 4 illustrates an example of combining quantum gates included in a quantum gate sequence;
FIG. 5 illustrates an example of the action of a first quantum gate sequence on a generator error;
FIG. 6 illustrates an example of the action of a second quantum gate sequence on a generator error;
FIG. 7 illustrates an example of correct and estimated values of a generator error;
FIG. 8 illustrates an example of correct and estimated values of a vector representation of the generator error;
FIG. 9 is a block diagram illustrating an example of functions of the information processing apparatus;
FIG. 10 illustrates an example of setup data;
FIG. 11 illustrates an example of experimental data and evaluation data;
FIG. 12 is a flowchart illustrating an example procedure for quantum operation evaluation; and
FIG. 13 is a flowchart (continued) illustrating the example procedure for the quantum operation evaluation.

DESCRIPTION OF EMBODIMENTS

Hereinafter, embodiments will be described with reference to the accompanying drawings.

First Embodiment

A first embodiment will be described.

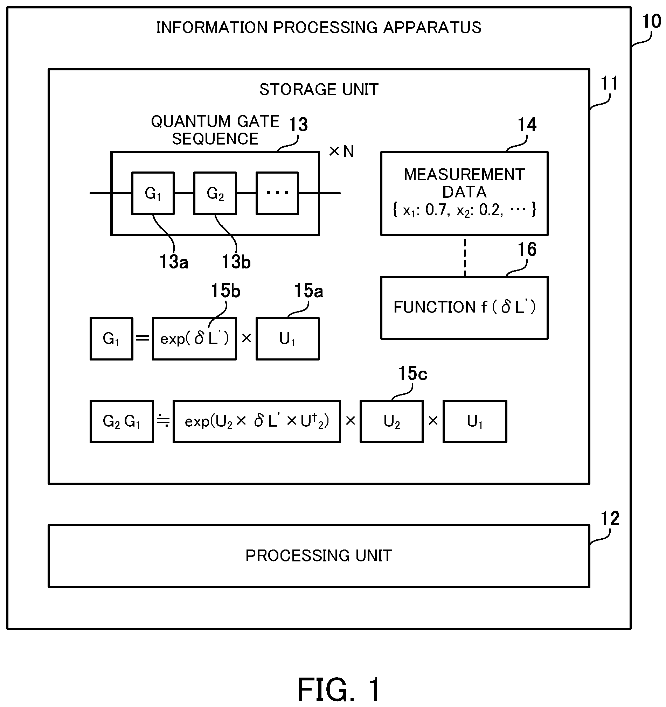

FIG. 1 is a view for describing an information processing apparatus according to the first embodiment.

The information processing apparatus 10 of the first embodiment evaluates the accuracy of quantum operations performed by a quantum computer, using quantum tomography. The information processing apparatus 10 may be a so-called classical computer. In addition, the information processing apparatus 10 may be a client device or a server device. Furthermore, the information processing apparatus 10 may be referred to as a computer or a quantum operation evaluation apparatus.

The information processing apparatus 10 includes a storage unit 11 and a processing unit 12. The storage unit 11 may be a volatile semiconductor memory, such as random access memory (RAM). Alternatively, the storage unit 11 may be a non-volatile storage device, such as a hard disk drive (HDD) or flash memory.

The processing unit 12 is, for example, a processor such as a central processing unit (CPU), a graphics processing unit (GPU), or a digital signal processor (DSP). Note that the processing unit 12 may include an application specific integrated circuit (ASIC), a field programmable gate array (FPGA), or another electronic circuit. For example, the processor executes programs stored in a memory such as RAM (which may be the storage unit 11). The processor may be referred to as processor circuitry. The information processing apparatus 10 may be provided with a plurality of processors. A set of these processors may be referred to as a multiprocessor or simply a "processor." Different processors may perform different ones of a plurality of processes performed by the information processing apparatus 10.

The storage unit 11 stores measurement data 14. The measurement data 14 represents the measurement values of qubits measured after the quantum computer executes a quantum gate sequence 13 on the qubits a plurality of times (N times). The quantum computer that executes the quantum gate sequence 13 is an evaluation-target quantum computer that is a target to be evaluated for implementation accuracy. The information processing apparatus 10 may be connected to the quantum computer and may read the measurement values from the quantum computer. Alternatively, the information processing apparatus 10 may receive the measurement data 14 from another information processing apparatus connected to the quantum computer. Furthermore, the information processing apparatus 10 may sequentially obtain the measurement values from the quantum computer while conducting data analysis that will be described later.

The quantum gate sequence 13 includes a plurality of quantum gates including quantum gates 13a and 13b. The quantum gate 13b is placed immediately after the quantum gate 13a. The plurality of quantum gates included in the quantum gate sequence 13 may be connected in series. As an example, each quantum gate 13a and 13b is a 180-degree rotation gate, a 90-degree rotation gate, or another.

The quantum gate 13a is an evaluation-target quantum gate that is a target to be evaluated for accuracy. The implemented quantum gate 13a has an error that indicates a deviation from its ideal action. The quantum gate sequence 13 may include two or more evaluation-target quantum gates. The quantum gate 13b may be an evaluation-target quantum gate, or may be a non-evaluation target quantum gate that is not an evaluation target. The quantum gate sequence 13 may include two or more non-evaluation target quantum gates. In the following data analysis, the actual errors of the non-evaluation target quantum gates may be known, or it may be assumed that the non-evaluation target quantum gates have no errors or that the non-evaluation target quantum gates have fixed errors.

The quantum gate sequence 13 is described, for example, using a quantum circuit. A quantum circuit in which the same quantum gate sequence is repeated a plurality of times may sometimes be referred to as an error amplification circuit. The quantum computer executes the quantum gate sequence 13 on the qubits, in order from the first to the last quantum gate of the quantum gate sequence 13. Then, using the quantum state indicated by the qubits, the quantum computer repeats the execution of the quantum gate sequence 13 again, in order from the first to the last quantum gate of the quantum gate sequence 13. The error of the quantum gate 13a is amplified through the error amplification circuit. The measurement values of the qubits finally measured by the quantum computer contain the components of the amplified error.

Even with the same qubit initialization method, the same types of quantum gates, and the same measurement method, the quantum computer probabilistically obtains the measurement values. Therefore, the measurement data 14 represents a probability distribution that lists the occurrence probabilities of the plurality of possible values of the qubits, for example. The information processing apparatus 10 may cause the quantum computer to conduct a plurality of trials each of which involves initializing the qubits, executing the quantum gate sequence 13 a certain number of times, and measuring the values of the qubits. The information processing apparatus 10 may calculate the occurrence probability of each value by dividing the number of occurrences of the value by the total number of trials.

The measurement data 14 may include a plurality of measurement results corresponding to different initialization methods and different measurement methods. In addition, the measurement data 14 may include a plurality of measurement results corresponding to different quantum gate sequences or a plurality of measurement results corresponding to different numbers of repetitions N (hereinafter, the number of repetitions is referred to as a repetition count).

The processing unit 12 analyzes the measurement data 14 to estimate an error that occurs when the quantum computer executes the quantum gate 13a. To be precise, the effect of the error of the quantum gate 13a on the measurement values is nonlinear. To simplify the data analysis, the processing unit 12 generates a function 16 that linearly approximates the effect of the error of the quantum gate 13a on the measurement values. The function 16 is a linear approximation function and is represented, for example, using a matrix.

The processing unit 12 estimates the error of the quantum gate 13a using the function 16 and the measurement data 14. For example, the processing unit 12 extracts amplified components proportional to the repetition count N, from the measurement data 14. The processing unit 12 then optimizes the error of the quantum gate 13a to be input into the function 16 so as to minimize the difference between the extracted amplified components and the output of the function 16. For example, the processing unit 12 formulates this optimization problem as a quadratic programming problem with positive semidefinite constraints, and calculates the error of the quantum gate 13a using a mathematical programming solver.

The function 16 is generated as follows. The processing unit 12 generates a matrix that represents the action of the entire quantum gate sequence 13 on the error, on the basis of matrices representing the individual quantum gates included in the quantum gate sequence 13, in order to obtain a change in the error caused by a single execution of the quantum gate sequence 13. For example, the processing unit 12 combines the plurality of quantum gates included in the quantum gate sequence 13, sequentially starting from the first quantum gate. In combining the quantum gates, the processing unit 12 linearly approximates the action on the error.

In addition, in order to obtain a change in the error caused by N repetitions of the quantum gate sequence 13, the processing unit 12 generates a matrix that represents the action of the repeated execution, on the basis of the matrix representing the action of the entire quantum gate sequence 13. In the amplification by the repeated execution, the processing unit 12 linearly approximates the action on the error. The eigenvalues of matrices may be used for the linear approximation calculations in the combination and amplification. Using the resulting matrix obtained in the amplification, the processing unit 12 generates the function 16, which is a linear approximation function. At this time, the processing unit 12 may extract components proportional to the repetition count N.

Consider now that the space to which the matrices representing the quantum operations performed by the quantum gate sequence 13 belong may include singularities. A singularity is a point indicating a matrix from which eigenvalues satisfying a certain condition are calculated. The singularity may also be referred to as a critical point. For example, a singularity corresponds to a matrix that has different eigenvalues whose exponential functions, with Euler's number e as the base, have the same value. In the case where the eigenvalues are complex numbers, the values of the exponential functions calculated from different eigenvalues may be equal. The processing unit 12 may determine that two eigenvalues satisfy the above certain condition if the difference between the values of their exponential functions is less than a threshold.

With respect to certain types of quantum gates in the quantum gate sequence 13, a matrix corresponding to a singularity may appear in the above-described linear approximation process. A quantum gate included in the quantum gate sequence 13 may independently correspond to a singularity, or a composite quantum gate may correspond to a singularity. As an example, a quantum gate corresponding to a singularity is a 180-degree rotation gate. At a singularity, a problematic value, such as division by zero, may be calculated. Therefore, with simple linear approximation, there are cases where the action of the quantum gate sequence 13 on the error is not calculated.

To avoid this, in the second embodiment, the processing unit 12 defines the error of the quantum gate 13a as follows, so as to suppress the effect of the singularity. The processing unit 12 represents the quantum gate 13a, which contains the error, as the product of a matrix 15a and the matrix exponential of a matrix 15b. In FIG. 1, the matrix 15a is denoted by $U_1$, the matrix 15b is denoted by $\delta L'$, and the matrix exponential of the matrix 15b is denoted by $\exp(\delta L')$.

The matrix 15a is a first matrix that represents the ideal value of the quantum gate 13a. The ideal value indicates the ideal transformation of a quantum state and is determined according to the type of the quantum gate 13a. Typically, a matrix representing the ideal value of a quantum gate is a unitary matrix. The unitary matrix has the property that the product of the unitary matrix and its adjoint matrix results in the identity matrix. The matrix 15b is a second matrix that represents an error that occurs when the quantum computer executes the quantum gate 13a. The error is a deviation from the ideal value. The error represented by the matrix 15b is an error related to a generator (Lindbladian) corresponding to the matrix logarithm of the matrix 15a and may be referred to as a generator error. At the stage where the analysis of the measurement data 14 begins, the matrix 15b is unknown. Therefore, the processing unit 12 defines a variable representing the matrix 15b.

Here, it may be considered that the processing unit 12 defines the generator error as a matrix that is added to the ideal value of the generator. The ideal value of the generator is the matrix logarithm of the matrix 15a. For example, it may be considered that the processing unit 12 defines the generator error $\delta L$ so that the quantum gate 13a is represented as $\exp(L^{ideal} + \delta L)$, where $L^{ideal}$ denotes the ideal value of the generator. However, if the generator error is defined in this manner, a matrix corresponding to a singularity may be calculated in the linear approximation process, which renders the approximation calculation infeasible.

To avoid this, in the second embodiment, the processing unit 12 represents the error as the matrix 15b. To be precise, the error represented by the matrix 15b is an indicator that is different from the above-described generator error $\delta L$. However, they both are errors related to the generator of the quantum gate 13a. The error represented by the matrix 15b may be sufficient, or the generator error $\delta L$ might be preferable, depending on an intended use of error estimation results. One intended use of the estimation results is the calibration of the quantum computer. If the user desires to obtain the generator error $\delta L$, the user may convert the error represented by the matrix 15b into the generator error $\delta L$.

In generating the function 16, the processing unit 12 approximates a composite quantum gate that is a combination of the quantum gates 13a and 13b, as follows. The processing unit 12 approximates the composite quantum gate by the product of the matrix 15a, a matrix 15c, and the matrix exponential of the transformation result of transforming the value of the variable. This linear approximation utilizes the conditions that the matrices 15a and 15c are unitary matrices and that the error is very small. The matrix 15c is a third matrix that represents the ideal value of the quantum gate 13b. This ideal value indicates the ideal transformation of a quantum state and is determined according to the type of the quantum gate 13b.

The transformation result is a transformation of the unknown matrix 15b using the matrix 15c. The transformation result is the product of the adjoint matrix of the matrix 15c, the matrix 15b, and the matrix 15c. If the quantum gate 13b contains a known or unknown error, the quantum gate 13b may be represented as the product of the matrix 15c and the matrix exponential of a fourth matrix representing the error of the quantum gate 13b, as with the quantum gate 13a. The transformation result is a result of adding the fourth matrix to the product of the adjoint matrix of the matrix 15c, the matrix 15b, and the matrix 15c.

In the case where the quantum gate sequence 13 includes three or more quantum gates, the processing unit 12 may further combine the other quantum gates with the composite quantum gate formed by combining the quantum gates 13a and 13b. In this manner, the processing unit 12 approximates the composite quantum gate corresponding to the entire quantum gate sequence 13. Then, using the approximation result of the composite quantum gate, the processing unit 12 generates a matrix that represents the action applied to the variable representing the matrix 15b by N repetitions of the quantum gate sequence 13. The processing unit 12 generates the function 16 using the generated matrix.

In this connection, the processing unit 12 may approximate the action of the repeated execution as follows. The composite quantum gate is represented as the product of a fifth matrix and the matrix exponential of a sixth matrix. The fifth matrix is generated from the product of the matrices 15a and 15c. The sixth matrix is defined based on the above-described transformation result and depends on the variable representing the error of the quantum gate 13a.

For example, the processing unit 12 approximates the repeated execution of the quantum gate sequence 13 by the matrix exponential of the transformation result of transforming the sixth matrix using the fifth matrix and the repetition count N. This transformation result may be generated by adding the sixth matrix to the product of the adjoint matrix of the fifth matrix, the sixth matrix, and the fifth matrix and then multiplying the addition result by half the repetition count N.

Furthermore, the processing unit 12 may calculate a plurality of eigenvalues of the matrix logarithm of the fifth matrix, and approximate the repeated execution of the quantum gate sequence 13 with an approximation method that depends on whether the plurality of calculated eigenvalues include eigenvalues satisfying a certain condition. The certain condition may be that different eigenvalues whose exponential functions have the same value have been calculated. The processing unit 12 may execute the above-described approximation method if the certain condition is satisfied, and may execute another approximation method if the certain condition is not satisfied.

The above-described approximation method utilizes the conditions that the fifth matrix is a unitary matrix and that the error is very small. In addition, the above-described approximation method utilizes the condition that the fifth matrix corresponds to a 180-degree rotation gate, which is a typical quantum gate with singularities. In the case of executing the above-described approximation method, the repetition count N is preferably even.

As described above, the information processing apparatus 10 of the first embodiment obtains the measurement data 14. The measurement data 14 represents the measurement values of qubits measured after the quantum computer repeatedly executes the quantum gate sequence 13, which includes the quantum gates 13a and 13b, on the qubits a plurality of times. The information processing apparatus 10 represents the quantum gate 13a as the product of the matrix 15a, which represents the ideal value of the quantum gate 13a, and the matrix exponential of the matrix 15b, which represents an error that occurs when the quantum computer executes the quantum gate 13a, and defines a variable representing the matrix 15b.

The information processing apparatus 10 approximates a composite quantum gate that is a combination of the quantum gates 13a and 13b, by the product of the matrix 15a, the matrix 15c representing the ideal value of the quantum gate 13b, and the matrix exponential of the transformation result of transforming the value of the variable using the matrix 15c. Through this approximation, the information processing apparatus 10 generates the function 16 that linearly approximates the effect of the error on the measurement values. The information processing apparatus 10 then estimates the error using the function 16 and measurement data 14.

In the manner described above, the error of the quantum gate 13a implemented on the quantum computer is estimated. Therefore, the user is able to perform a calibration to adjust the values of control parameters within the quantum computer on the basis of the estimated error. In addition, the error amplification circuit, in which the quantum gate sequence 13 is repeated a plurality of times, is used to amplify the error, which contributes to improving the accuracy of the error estimation.

Furthermore, the function 16 linearly approximates the action of the quantum gate sequence 13. This reduces the computational load of the quantum tomography and improves the numerical stability of the estimated error. In addition, by representing the error of the quantum gate 13a as the matrix 15b and by utilizing the condition that the matrix 15a is a unitary matrix in the linear approximation, it becomes possible to prevent the failure of the approximation calculation caused by the effect of singularities. Thus, even in the case where the quantum gate sequence 13 includes a quantum gate with singularities, it is possible to perform the linear approximation, which streamlines the evaluation of the error of the quantum gate 13a.

Second Embodiment

A second embodiment will now be described.

An information processing system of the second embodiment includes an information processing apparatus 100 and a quantum computer 115. The information processing apparatus 100 evaluates the accuracy of quantum operations performed by the quantum computer 115, using quantum tomography. The information processing apparatus 100 performs a calibration to adjust the values of control parameters within the quantum computer 115, in order to improve the accuracy. The information processing apparatus 100 corresponds to the information processing apparatus 10 of the first embodiment.

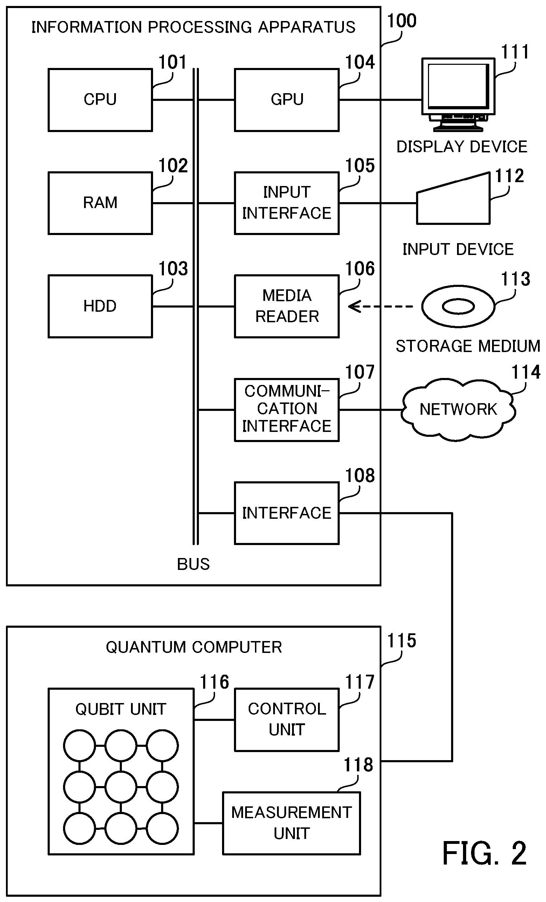

FIG. 2 illustrates an example of the hardware configuration of the information processing apparatus according to the second embodiment.

The information processing apparatus 100 includes a CPU 101, a RAM 102, an HDD 103, a GPU 104, an input interface 105, a media reader 106, a communication interface 107, and an interface 108. These units are connected to a bus. The CPU 101 corresponds to the processing unit 12 of the first embodiment. The RAM 102 or HDD 103 corresponds to the storage unit 11 of the first embodiment.

The CPU 101 is a processor that executes program commands. The CPU 101 loads programs and data from the HDD 103 to the RAM 102 and executes the programs. The information processing apparatus 100 may be provided with a plurality of processors.

The RAM 102 is a volatile semiconductor memory that temporarily stores programs being executed by the CPU 101, and data being used by the CPU 101 in processing. The information processing apparatus 100 may be provided with a different type of volatile memory than RAM.

The HDD 103 is a non-volatile storage device that stores software programs such as an operating system (OS), middleware, and application software, and data. The information processing apparatus 100 may be provided with another type of non-volatile storage device such as flash memory or a solid state drive (SSD).

The GPU 104 performs image processing in collaboration with the CPU 101 and outputs images to a display device 111 connected to the information processing apparatus 100. Examples of the display device 111 include a cathode ray tube (CRT) display, a liquid crystal display, an organic electro-luminescence (EL) display, and a projector. Another type of output device such as a printer may be connected to the information processing apparatus 100.

The GPU 104 may be used as a general-purpose computing on graphics processing unit (GPGPU). The GPU 104 is able to execute programs in accordance with instructions from the CPU 101. The information processing apparatus 100 may be provided with a volatile semiconductor memory other than the RAM 102 as a GPU memory.

The input interface 105 receives an input signal from an input device 112 connected to the information processing apparatus 100. Examples of the input device 112 include a mouse, a touch panel, and a keyboard. A plurality of input devices may be connected to the information processing apparatus 100.

The media reader 106 is a reading device that reads programs and data from a storage medium 113. Examples of the storage medium 113 include a magnetic disk, an optical disc, and a semiconductor memory. Magnetic disks include flexible disks (FDs) and HDDs. Optical discs include compact discs (CDs) and digital versatile discs (DVDs). The media reader 106 copies the programs and data from the storage medium 113 to another storage medium such as the RAM 102 or the HDD 103. The read programs may be executed by the CPU 101.

The storage medium 113 may be a portable storage medium. The storage medium 113 may be used to distribute the programs and data. The storage medium 113 and HDD 103 may be referred to as computer-readable storage media.

The communication interface 107 communicates with other information processing apparatuses over a network 114. The communication interface 107 may be a wired communication interface that is connected to a wired communication device such as a switch or a router, or may be a wireless communication interface that is connected to a wireless communication device such as a base station or an access point.

The interface 108 is connected to the quantum computer 115. The interface 108 sends commands to the quantum computer 115 in accordance with instructions from the CPU 101. In addition, the interface 108 receives data from the quantum computer 115 and writes the received data on the RAM 102 or HDD 103.

The quantum computer 115 includes a qubit unit 116, a control unit 117, and a measurement unit 118. The qubit unit 116 includes a plurality of qubits representing a quantum state. The qubit unit 116 performs quantum operations corresponding to quantum gates in response to an instruction from the information processing apparatus 100. A quantum operation changes the quantum state represented by the qubits. The behavior of the quantum operations is adjusted with values that are input for control parameters from the control unit 117.

The control unit 117 receives a command for the calibration of the quantum operations from the information processing apparatus 100. The command includes the names and values of control parameters. The control unit 117 inputs the values of the control parameters to the qubit unit 116. Examples of the control parameters include the duration, amplitude, waveform, and others of drive pulses to be applied to qubits. Changing the values of the control parameters changes the accuracy of the quantum operations.

The measurement unit 118 measures the values of the qubits according to an instruction from the information processing apparatus 100 and stores the measurement values in a memory of the quantum computer 115. The measurement unit 118 sends the measurement values to the information processing apparatus 100 in response to a request from the information processing apparatus 100.

In general, quantum information processing includes quantum computation, quantum simulation, quantum communication, quantum cryptography, quantum sensing, and others. Examples of a physical platform for the quantum information processing include superconducting quantum circuits, semiconductor quantum dots, diamond NV centers, NMR molecules, neutral atoms, trapped ions, photons, and others. A typical quantum information processing protocol based on a quantum circuit uses three types of quantum operations: initialization, quantum gates, and measurement.

Quantum operations implemented on the quantum computer 115 have errors that indicate deviations from ideal quantum operations. To improve the accuracy of the quantum operations, the information processing apparatus 100 evaluates and calibrates the quantum computer 115. The evaluation involves estimating errors in the quantum operations. The calibration involves changing the values of control parameters on the basis of the error information so as to reduce the errors. The information processing apparatus 100 may repeat the evaluation and calibration.

The information processing apparatus 100 evaluates the quantum operations using quantum tomography. The information processing apparatus 100 collects the measurement values of the qubits from the quantum computer 115 while changing a combination of initialization, quantum gates, and measurement. The information processing apparatus 100 analyzes the experimental data, which associates each trial combination with the measurement values, to estimate the errors in the quantum operations. In this connection, the quantum tomography enables the simultaneous estimation of errors of a plurality of quantum gates.

The information processing apparatus 100 generates a quantum circuit that includes an error amplification circuit in which the same quantum gate sequence is repeated a plurality of times, and causes the quantum computer 115 to execute the quantum circuit. The repetition count may be, for example, 10, 100, 1,000 times, or another. Errors of the quantum gates included in the quantum gate sequence are amplified through the error amplification circuit, which increases the error components contained in the measurement values and thus enhances the evaluation accuracy. Examples of the quantum tomography technique using an error amplification circuit include gate-set tomography (GST), idle tomography (IT), and Hamiltonian error amplifying tomography (HEAT).

GST is described, for example, in the following non-patent literature: Erik Nielsen, John King Gamble, Kenneth Rudinger, Travis Scholten, Kevin Young and Robin Blume-Kohout, "Gate Set Tomography," the open journal for quantum science, volume 5, page 557, October 2021.

HEAT is described, for example, in the following non-patent literature: Neereja Sundaresan, Isaac Lauer, Emily Pritchett, Easwar Magesan, Petar Jurcevic and Jay M. Gambetta, "Reducing Unitary and Spectator Errors in Cross Resonance with Optimized Rotary Echoes," PRX Quantum of the American Physical Society, Volume 1, page 020318, December 2020.

In addition, an error amplification circuit is described in the following non-patent literatures. Gabriel O. Samach, Ami Greene, Johannes Borregaard, Matthias Christandl, Joseph Barreto, David K. Kim, Christopher M. McNally, Alexander Melville, Bethany M. Niedzielski, Youngkyu Sung, Danna Rosenberg, Mollie E. Schwartz, Jonilyn L. Yoder, Terry P. Orlando, Joel I-Jan Wang, Simon Gustavsson, Morten Kjaergaard and William D. Oliver, "Lindblad Tomography of a Superconducting Quantum Processor," Physical Review Applied of the American Physical Society, Volulme 18, page 064056, December 2022.

Yanwu Gu, Rajesh Mishra, Berthold-Georg Englert and Hui Khoon Ng, "Randomized Linear Gate-Set Tomography," PRX Quantum of the American Physical Society, Volume 2, page 030328, August 2021.

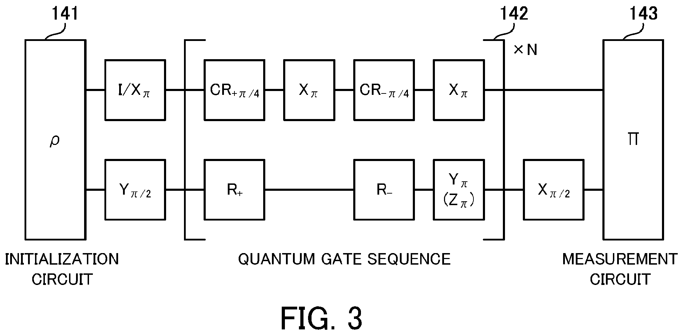

FIG. 3 illustrates an example of an evaluation quantum circuit including an error amplification circuit.

This quantum circuit includes an initialization circuit 141, a quantum gate sequence 142, and a measurement circuit 143. The initialization circuit 141 initializes one or more qubits to generate a desired quantum state. The quantum gate sequence 142 includes one or more quantum gates. The error amplification circuit repeats the quantum gate sequence 142 in series N times. The measurement circuit 143 measures the values of the qubits.

A non-repetitive quantum gate may be included between the initialization circuit 141 and the quantum gate sequence 142. Similarly, a non-repetitive quantum gate may be included between the quantum gate sequence 142 and the measurement circuit 143. In FIG. 3, an X gate is a rotation gate that rotates around the x-axis, a Y gate is a rotation gate that rotates around the y-axis, and a Z gate is a rotation gate that rotates around the z-axis. A CR gate is a cross-resonance gate. An R gate is a rotation gate that rotates by a fixed amount.

The quantum tomography collects experimental data while changing the combination of the quantum gate sequence 142, the repetition count N, the initialization circuit 141, and the measurement circuit 143. The quantum gate sequence 142 includes one or more evaluation-target quantum gates that are targets for error evaluation. The quantum gate sequence 142 may include one or more non-evaluation target quantum gates that are not targets for error evaluation.

The ideal actions of the evaluation-target and non-evaluation target quantum gates are known. Errors of the evaluation-target quantum gates in the quantum computer 115 are unknown. Errors of the non-evaluation target quantum gates in the quantum computer 115 may be known or unknown. In the latter case, the quantum tomography may assume that the errors of the non-evaluation target quantum gates are zero or fixed values.

If an attempt is made to precisely define the action of the error amplification circuit on the errors of quantum gates, a highly-nonlinear numerical optimization problem needs solving. This may increase the computational load of experimental data analysis and deteriorate the stability of the solution search. To avoid these, the information processing apparatus 100 linearly approximates the action of the error amplification circuit and formulates the quantum gate error search as a quadratic programming problem with positive semidefinite constraints. The quadratic programming problem with positive semidefinite constraints is a numerical optimization problem that optimizes a quadratic function under linear constraints, and involves matrices with non-negative eigenvalues. The method employed in the second embodiment may be referred to as robust Lindbladian tomography (RLT).

The following describes quantum tomography calculations according to the second embodiment.

The action of a quantum gate acting on a d-dimensional quantum system is described by a linear map given by Formula (1). This linear map is a map from a (d × d)-dimensional complex space to another (d × d)-dimensional complex space and is a trace-preserving and completely positive map. Here, denote G as the representation matrix of the linear map of Formula (1) under the orthonormal basis given by Formula (2). This orthonormal basis is a set of $d^2$ members $B_\alpha$ that are mutually orthogonal and each have norm 1. The component $G_{\alpha\beta}$ at the $\alpha$-th row and $\beta$-th column of the matrix G is calculated using the member $B_\alpha$ of the orthonormal basis corresponding to the $\alpha$-th row, the member $B_\beta$ of the orthonormal basis corresponding to the $\beta$-th column, and the trace, as given by Formula (3).

$$\mathcal{G} : \mathbf{C}^{d\times d} \rightarrow \mathbf{C}^{d\times d} \qquad (1)$$

$$\mathbf{B} = \{B_\alpha\}_{\alpha=0}^{d^2-1} \qquad (2)$$

$$G_{\alpha\beta} = \mathrm{Tr}[B_\alpha^\dagger \mathcal{G}(B_\beta)] \qquad (3)$$

With respect to the quantum gate specified by Formula (1), there exists a linear map that satisfies the relationship given by Formula (4) via the exponential map exp. This linear map may be referred to as a generator (Lindbladian). Denoting L as the representation matrix of the linear map satisfying Formula (4), the relationship of Formula (5) using a matrix exponential function e holds between the representation matrix G of the quantum gate and the representation matrix L of the generator. The equation $G = e^L$ is expanded as given by Formula (5), where $L^{\text{ideal}}$ denotes the representation matrix of the ideal value of the generator and $\delta L$ denotes the representation matrix of the error of the generator.

$$\mathcal{G} = \exp(\mathcal{L}) \qquad (4)$$

$$G = e^L = e^{L^{\text{ideal}}+\delta L} \qquad (5)$$

In the case where the error of a quantum gate is amplified through the error amplification circuit, the error of the generator corresponding to the matrix logarithm of the quantum gate is easier to analyze than the error of the quantum gate itself. This is because, as the error accumulates, a rotation may occur in the qubits, thereby creating a possibility that the angular deviation is not exactly proportional to the repetition count N. Therefore, in the second embodiment, the information processing apparatus 100 estimates the generator error from experimental data. Since the ideal value of the generator is known, knowing the generator error enables determining the actual G in the quantum computer 115. To simplify the description, the following may make no distinction between a linear map and its representation matrix. For example, a quantum gate may be denoted as G, a generator as L, and a generator error as $\delta L$.

To prepare an error amplification circuit, a set of quantum gates $I_g$, represented by Formula (6), is provided by the user. The quantum gates included in the set $I_g$ are identified by unique numbers. Among the $n_g$ different quantum gates, the first $n_{g,1}$ quantum gates are evaluation-target quantum gates, and the remaining quantum gates are non-evaluation target quantum gates.

$$I_g = \{\mathcal{G}_i\}_{i=1}^{n_g} \qquad (6)$$

A quantum gate sequence that forms the error amplification circuit is a quantum circuit in which one or more (typically two or more) quantum gates among the quantum gates included in the set $I_g$ are arranged in series. A quantum gate sequence a is defined by Formula (7), where m denotes the length of the quantum gate sequence. Each element on the right-hand side of Formula (7) indicates a number identifying a quantum gate included in the set $I_g$. The same quantum gate may appear two or more times within the quantum gate sequence a.

$$a = \{i_1, i_2, \ldots, i_{m-1}, i_m\} \qquad (7)$$

Denote G(a) as a composite quantum gate corresponding to the action of the entire quantum gate sequence a. G(a) is expanded as given by Formula (8). The product of three or more matrices is calculated from right to left. Here, denoting N as a repetition count for the error amplification circuit, a composite quantum gate corresponding to the action of the entire error amplification circuit is represented by $G(a)^N$.

$$\begin{aligned} G(a) &= G_{i_m} G_{i_{m-1}} \cdots G_{i_2} G_{i_1} \\ &= e^{L_{i_m}^{\text{ideal}} + \delta L_{i_m}} e^{L_{i_{m-1}}^{\text{ideal}} + \delta L_{i_{m-1}}} \cdots e^{L_{i_2}^{\text{ideal}} + \delta L_{i_2}} e^{L_{i_1}^{\text{ideal}} + \delta L_{i_1}} \end{aligned} \qquad (8)$$

The $n_{g,1}$ generator errors δL, represented by Formula (9), are estimation targets. To collect measurement values measured under various conditions, a set of quantum gate sequences a and a set of repetition counts N, as represented by Formula (10), are provided by the user. As the quantum gate sequences, $n_a$ different quantum gate sequences are provided. As the repetition counts, $n_N$ different repetition counts are provided for each quantum gate sequence.

$$\{\delta L_i\}_{i=1}^{n_{g,1}} \qquad (9)$$

$$\mathcal{A} = \{a_i\}_{i=1}^{n_a}, \ \mathcal{N}_i = \{N_{i,j}\}_{j=1}^{n_N} \qquad (10)$$

Different repetition counts N and N' provided for the same quantum gate sequence satisfy the condition of Formula (11). That is, the action of an error-free ideal quantum gate sequence repeated N times matches the action of the error-free ideal quantum gate sequence repeated N' times. Therefore, it is easy to extract amplified error components from measurement values obtained under the different repetition counts.

$$[G(a)^{\text{ideal}}]^N = [G(a)^{\text{ideal}}]^{N'}, \ N, N' \in \mathcal{N}_i \qquad (11)$$

In addition, for each quantum gate sequence, a set of combinations of initialization ρ and measurement Π, as represented by Formula (12), is provided by the user. This set includes $n_{t,i}$ combinations of initialization ρ and measurement Π. Therefore, the quantum computer 115 generates the initial quantum state using the initialization ρ, repeatedly executes the quantum gate sequence a N times, and obtains measurement values with the measurement Π. The quantum computer 115 performs this experiment for all possible combinations of a, N, and (ρ, Π).

$$\mathcal{T}_i = \{(\rho_{i,k}, \Pi_{i,k})\}_{k=1}^{n_{t,i}} \qquad (12)$$

Denote |X>> as the vectorization of a matrix X with respect to the basis B. The probability of obtaining a measurement value x in each experiment is calculated as given by Formula (13). The matrix X is an element in the (d × d)-dimensional complex space, and the vector |X>> is an element in the $d^2$-dimensional complex space. Hereafter, i may be used as an identifier identifying a quantum gate sequence a, j as an identifier identifying a repetition count N, and k as an identifier identifying a combination of initialization and measurement (ρ, Π). The measurement values are probabilistically obtained due to the nature of quantum computing. Therefore, the quantum computer 115 obtains $n_{i,j,k}$ measurement values as samples for each combination (i, j, k).

$$p_x(i, j, k) = \langle\langle \Pi_{i,k,x} | G(a)^{N_j} | \rho_{i,k} \rangle\rangle \qquad (13)$$

Denote $f_{i,j,k,x}$ as the frequency of obtaining the measurement value x. The frequency distribution represented by Formula (14) is calculated for each combination (i, j, k). The frequency $f_{i,j,k,x}$ is calculated by dividing the number of samples with the measurement value x by $n_{i,j,k}$.

$$\boldsymbol{f}_{i,j,k} = \{f_{i,j,k,x}\}_x \qquad (14)$$

After the experimental phase in which frequency distributions are collected as described above, the information processing apparatus 100 executes a data processing phase to analyze the experimental data representing the frequency distributions. The data processing phase includes step #1 of extracting amplified components from the experimental data, step #2 of linearly approximating the action of the error amplification circuit, and step #3 of solving a numerical optimization problem defined using the results of steps #1 and #2. In this connection, steps #1 and #2 may be executed in reverse order. In addition, the information processing apparatus 100 may omit step #2 by reusing the action of the error amplification circuit previously calculated in the quantum tomography.

In step #1, the information processing apparatus 100 extracts primary components proportional to the repetition count N from the experimental data. The experimental data contains constant components independent of the repetition count N, primary components proportional to the repetition count N, and secondary and higher-order components with respect to the repetition count N. The ideal value of a generator corresponds to a constant component. A generator error amplified by the error amplification circuit corresponds to a primary component. The following describes how to extract a primary component through extrapolation.

The information processing apparatus 100 selects and fixes a combination of a quantum gate sequence a, a combination of initialization and measurement ($\rho$, $\Pi$), and a measurement value x. The information processing apparatus 100 then expands the probability $p_x(i, j, k)$ into a series in terms of the repetition counts N, as given by Formula (15). The probability $p_x(i, j, k)$ is a probability at which the measurement value x is obtained through the experiment under (i, j, k), and $h_\nu$ denotes a $\nu$-th order expansion coefficient. Because of the decomposition accuracy, the information processing apparatus 100 approximates the series expansion up to the infinite order given by Formula (15), by a finite series sum up to a ($n_N$ - 1)th order.

$$p_x(i, j, k) = \sum_{\nu=0}^{\infty} h_\nu (N_j)^\nu \qquad (15)$$

Formula (16) represents a vector of probabilities $p_x(i, j, k)$ collected for $n_N$ repetition counts, where T denotes a transposition. Using a Vandermonde matrix V associated with the repetition counts N, defined by Formula (17), the finite series sum is expressed as given by Formula (18). The Vandermonde matrix V is a matrix that has $n_N$ row vectors corresponding to $n_N$ repetition counts, which are each a row vector of powers of the repetition count N from the 0th power to the ($n_N$ - 1)th power. The coefficient vector h in Formula (18) is a vector of expansion coefficients $h_\nu$ from the 0th order to the ($n_N$ - 1)th order.

$$\tilde{\boldsymbol{p}}_{i,k,x}^T = (p_x(i, j, k))_{j=1}^{n_N} \qquad (16)$$

$$V(\mathcal{N}_i) = \begin{bmatrix} 1 & N_1 & (N_1)^2 & \cdots & (N_1)^{n_N-1} \\ 1 & N_2 & (N_2)^2 & \cdots & (N_2)^{n_N-1} \\ \vdots & \vdots & \vdots & \ddots & \vdots \\ 1 & N_{n_N} & (N_{n_N})^2 & \cdots & (N_{n_N})^{n_N-1} \end{bmatrix} \qquad (17)$$

$$\tilde{\boldsymbol{p}}_{i,k,x} \approx V\boldsymbol{h} \qquad (18)$$

In the case where the $n_N$ repetition counts are each different, the Vandermonde matrix V becomes an invertible matrix. The coefficient vector h is calculated using the inverse matrix of the Vandermonde matrix V, as given by Formula (19). In the experiment using the quantum computer 115, the frequency $f_{i,j,k,x}$ corresponding to the estimated value of the probability $p_x(i, j, k)$ is measured. Therefore, the information processing apparatus 100 uses the frequency $f_{i,j,k,x}$, instead of the probability $p_x(i, j, k)$. Formula (20) represents a vector of the frequencies $f_{i,j,k,x}$ collected for the $n_N$ repetition counts. The estimated value $h^{est}$ of the coefficient vector is calculated as given by Formula (21). In this manner, the information processing apparatus 100 calculates the expansion coefficients from the 0th order to the ($n_N$ - 1)th order from the measured frequencies $f_{i,j,k,x}$.

$$\boldsymbol{h} \approx V^{-1}\tilde{\boldsymbol{p}}_{i,k,x} \qquad (19)$$

$$\tilde{\boldsymbol{f}}^T_{i,k,x} = (f_{i,j,k,x})^{n_N}_{j=1} \qquad (20)$$

$$\boldsymbol{h}^{\text{est}} = V^{-1}\tilde{\boldsymbol{f}}_{i,k,x} \qquad (21)$$

The second element of the coefficient vector h is the primary component proportional to the repetition count N. The information processing apparatus 100 extracts the primary component while changing the measurement value x. The information processing apparatus 100 calculates the coefficient vector $h^{\text{est}}_1(i, k)$ by collecting the primary components obtained with respect to the same (i, k) and different measurement values x. The information processing apparatus 100 calculates this coefficient vector $h^{\text{est}}_1(i, k)$ for all combinations of (i, k).

In step #2, the information processing apparatus 100 parameterizes the errors of the $n_{g,1}$ generators that are evaluation targets among the errors of the $n_g$ generators, collectively into a parameter v. The parameter v is a vector. The transformation from the $n_{g,1}$ generator errors to the parameter v may be any predefined affine transformation and may be defined using a matrix. This parameterization is defined so as to be invertible, in order to estimate the $n_{g,1}$ generator errors from an optimal value of the parameter v as described later.

For each combination (i, k), the information processing apparatus 100 linearly approximates the action of the error amplification circuit and generates a matrix $C_{i,k}$ representing the components proportional to the number of repetition N. The product of the matrix $C_{i,k}$ and the parameter v represents the effects of the errors of the evaluation-target generators on the primary components of the experimental data.

In addition, the information processing apparatus 100 vectorizes the errors of the non-evaluation target generators among the errors of the $n_g$ generators, in the same manner as for the parameter v. This vectorization uses the same transformation as for the errors of the evaluation-target generators. The information processing apparatus 100 applies the matrix $C_{i,k}$ to this vector to generate a vector $b_{i,k}$. The vector $b_{i,k}$ represents the effects of the errors of the non-evaluation target generators on the primary components of the experimental data. Since the errors of the non-evaluation target generators are provided by the user, the elements of the vector $b_{i,k}$ are calculated as specific numerical values. The linear approximation of the action of the error amplification circuit will be discussed later.

In step #3, the information processing apparatus 100 generates an objective function F(v) given by Formula (22), using the coefficient vector $h^{\text{est}}_1(i, k)$ generated in step #1 and the matrix $C_{i,k}$ and vector $b_{i,k}$ generated in step #2, where $W_{i,k}$ denotes a weight matrix set for (i, k) by the user. The information processing apparatus 100 calculates a parameter $v^{\text{est}}$ that minimizes the value of the objective function F(v), as given by Formula (23). The information processing apparatus 100 then returns the parameter $v^{\text{est}}$ back to the errors of the evaluation-target generators.

$$F(\boldsymbol{v}) = \frac{1}{2}\sum_{i,k} ||C_{i,k}\boldsymbol{v} + \boldsymbol{b}_{i,k} - \boldsymbol{h}^{\text{est}}_1(i, k)||^2_{W_{i,k}} \qquad (22)$$

$$\boldsymbol{v}^{\text{est}} = \text{argmin}_{\boldsymbol{v}:\text{physical}} F(\boldsymbol{v}) \qquad (23)$$

The numerical optimization problem that solves Formula (23) is least-squares fitting with physical constraints. The parameter $v^{\text{est}}$ is searched for such as to satisfy the physical constraints of the generator errors. Since the parameter v is resulted from an affine parameterization of the generator errors, the physical constraints of the parameter v are represented by linear positive semidefinite constraints. Furthermore, the objective function F(v) is a quadratic function of the parameter v. Therefore, this numerical optimization problem is formulated as a quadratic programming problem with positive semidefinite constraints and is solved using a positive semidefinite programming solver.

The following describes the linear approximation in step #2. Consider n-by-n complex square matrices A, B, and P, as given by Formula (24). The matrix A is diagonalizable and corresponds to the ideal value of a generator. The matrix A is decomposed by eigenvalue decomposition or spectral decomposition, as represented by Formula (25), where V denotes a matrix containing the eigenvectors as column vectors, A denotes a diagonal matrix with the eigenvalues on the diagonal, $a_j$ denotes a complex number representing an eigenvalue, and $P_j$ denotes a projection matrix corresponding to the eigenvalue $a_j$. The matrix A is decomposed into the sum of the products of the eigenvalue $a_j$ and the projection matrix $P_j$.

$$A, B, P \in \mathbb{C}^{n \times n} \qquad (24)$$

$$A = V \Lambda V^{-1} = \oplus_j a_j P_j \qquad (25)$$

The projection matrix P satisfies Formula (26), where $\delta_{jk}$ denotes a Kronecker delta. $\delta_{jk}$ is 1 when j equals k, and $\delta_{jk}$ is 0 when j and k are different. Therefore, the product of different projection matrices corresponding to different eigenvalues results in a zero matrix. On the other hand, the square of the same projection matrix results in the projection matrix itself.

$$P_j P_k = \delta_{jk} P_j \qquad (26)$$

Using the eigenvalues $a_j$ of the matrix A and the projection matrices $P_j$, six linear maps with respect to the matrix B are defined as in Formulae (27) to (32). $dcl_A$ indicates a decomposition to left with respect to the matrix A. $dcr_A$ indicates a decomposition to right with respect to the matrix A. $cml_A$ indicates a composition to left with respect to the matrix A.
$cmr_A$ indicates a composition to right with respect to the matrix A. $ssp_A$ indicates the sum of spectral projections with respect to the matrix A. $sspc_A$ indicates the sum of spectral projection complements with respect to the matrix A.

$$dcl_A(B) = \sum_{j,k} \ell_{jk} P_j B P_k \qquad (27)$$

$$dcr_A(B) = \sum_{j,k} \ell_{kj} P_j B P_k \qquad (28)$$

$$cml_A(B) = \sum_{j,k} \frac{1}{\ell_{jk}} P_j B P_k \qquad (29)$$

$$cmr_A(B) = \sum_{j,k} \frac{1}{\ell_{kj}} P_j B P_k \qquad (30)$$

$$ssp_A(B) = \sum_{i} P_i B P_i \qquad (31)$$

$$sspc_A(B) = \sum_{i,j (i \neq j)} P_i B P_j \qquad (32)$$

The coefficient used in Formulae (27) to (30) is defined as in Formula (33). In the case where the projection matrices $P_j$ and $P_k$ are identical, $l_{jk}$ is 1. In the case where the projection matrices $P_j$ and $P_k$ are different, $l_{jk}$ is calculated from the eigenvalues $a_j$ and $a_k$ corresponding to the projection matrices $P_j$ and $P_k$. These six linear maps may be represented by matrices using an orthonormal basis in the (n × n)-dimensional complex space. The representation matrices of these six linear maps are $n^2$-by-$n^2$ matrices, as represented by Formula (34).

$$\ell_{jk} = \begin{cases} 1 & (j = k) \\ \dfrac{e^{a_j - a_k} - 1}{a_j - a_k} & (j \neq k) \end{cases} \tag{33}$$

$$\mathrm{dcl}_A, \mathrm{dcr}_A, \mathrm{cml}_A, \mathrm{cmr}_A, \mathrm{ssp}_A, \mathrm{sspc}_A \in \mathbb{C}^{n^2 \times n^2} \tag{34}$$

Using dcl of Formula (27), the matrix exponential of the sum of the matrices A and B is calculated as given by Formula (35). The second term on the right-hand side is the secondary or higher-order component with respect to the matrix B. Therefore, the matrix exponential of the sum of the matrices A and B is linearly approximated as given by the first term on the right-hand side. In addition, using dcr of Formula (28), the matrix exponential of the sum of the matrices A and B is calculated as given by Formula (36). Therefore, the matrix exponential of the sum of the matrices A and B is also linearly approximated as given by the first term on the right-hand side.

$$e^{A+B} = e^{\mathrm{dcl}_A(B)} e^A + O(||B||^2) \tag{35}$$

$$e^{A+B} = e^A e^{\mathrm{dcr}_A(B)} + O(||B||^2) \tag{36}$$

Furthermore, using cml of Formula (29), the product of the matrix exponentials of the matrices A and B is calculated as given by Formula (37). Thus, the product of the matrix exponentials of the matrices A and B is linearly approximated as given by the first term on the right-hand side. In addition, using cmr of Formula (30), the product of the matrix exponentials of the matrices B and A is calculated as given by Formula (38). Therefore, the product of the matrix exponentials of the matrices B and A is also linearly approximated as given by the first term on the right-hand side.

$$e^B e^A = e^{A + \mathrm{cml}_A(B)} + O(||B||^2) \tag{37}$$

$$e^A e^B = e^{A + \mathrm{cmr}_A(B)} + O(||B||^2) \tag{38}$$

Using the linear maps of Formulae (27) to (30), the action of the composite quantum gate formed by combining the quantum gates $G_1$ and $G_2$ is approximated as given by Formula (39), where $L^{\mathrm{ideal}}$ is a composite generator corresponding to the matrix logarithm of the ideal value of the composite quantum gate, as defined by Formula (40).

$$\begin{aligned} G_2 G_1 &= e^{L_2^{\mathrm{ideal}} + \delta L_2} e^{L_1^{\mathrm{ideal}} + \delta L_1} \\ &\approx e^{L^{\mathrm{ideal}} + cmr_{L^{\mathrm{ideal}}}(dcr_{L_1^{\mathrm{ideal}}}(\delta L_1)) + cml_{L^{\mathrm{ideal}}}(dcl_{L_i^{\mathrm{ideal}}}(\delta L_2))} \end{aligned} \tag{39}$$

$$L^{\mathrm{ideal}} = \ln(e^{L_2^{\mathrm{ideal}}} e^{L_1^{\mathrm{ideal}}}) \tag{40}$$

Therefore, the generator error $\delta L_1$ of the quantum gate $G_1$ changes through the composite quantum gate as represented by Formula (41). In Formula (41), the change in $\delta L_1$ is linearly approximated using the linear maps $dcr_L$ and $cmr_L$. Similarly, the generator error $\delta L_2$ of the quantum gate $G_2$ changes through the composite quantum gate as represented by Formula (42). In Formula (42), the change in $\delta L_2$ is linearly approximated using the linear maps $dcl_L$ and $cml_L$. Formula (43) is the representation matrix of the change in $\delta L_1$ given by Formula (41). Formula (44) is the representation matrix of the change in $\delta L_2$ given by Formula (42).

$$\delta L_1 \mapsto cmr_{L^{\mathrm{ideal}}}(dcr_{L_1^{\mathrm{ideal}}}(\delta L_1)) \tag{41}$$

$$\delta L_2 \mapsto cml_{L^{\text{ideal}}}\left(dcl_{L_2^{\text{ideal}}}(\delta L_2)\right) \tag{42}$$

$$\text{cmr}_{L^{\text{ideal}}} \cdot \text{dcr}_{L_1^{\text{ideal}}} \tag{43}$$

$$\text{cml}_{L^{\text{ideal}}} \cdot \text{dcl}_{L_2^{\text{ideal}}} \tag{44}$$

In the case where the quantum gate sequence includes three or more quantum gates, the information processing apparatus 100 combines the quantum gates one by one, in order from the first to the last quantum gate. The information processing apparatus 100 first combines the first and second quantum gates. Then, the information processing apparatus 100 combines the third quantum gate with the resulting composite quantum gate. As a result of repeatedly combining the quantum gates, the information processing apparatus 100 generates a composite quantum gate corresponding to the entire quantum gate sequence. By doing so, the changes in the generator errors through the quantum gate sequence are linearly approximated.

After that, the information processing apparatus 100 calculates the action of repeated execution of the quantum gate sequence. N repetitions of a quantum gate are defined by Formula (45). The composite quantum gate obtained by combining the quantum gate sequence may be expressed in the form of $e^{A+B}$. Assuming that c satisfying mod (nA) = cA exists, the N repetitions of this composite quantum gate are defined by Formula (46) using ssp and sspc of Formulae (31) and (32). Here, c is a constant independent of the repetition count N. The first term on the right-hand side is the primary component with respect to the matrix B. The second term on the right-hand side is the secondary or higher-order component with respect to the matrix B.

$$G^N = \left[e^{L^{\text{ideal}}+\delta L}\right]^N \tag{45}$$

$$\left[e^{A+B}\right]^N = e^{c \cdot A + c \cdot \text{sspc}_A(B) + N \cdot \text{ssp}_A(B)} + O(||B||^2) \tag{46}$$

Thus, the generator error $\delta L$ of the quantum gate G changes through the N repetitions as represented by Formula (47). In Formula (47), the change in $\delta L$ is linearly approximated using the linear maps ssp and sspc. The first term on the right-hand side represents a component that is not amplified through the N repetitions. The second term on the right-hand side represents the primary component proportional to the repetition count N. Formula (48) represents the representation matrix of the action that does not amplify $\delta L$ during the N repetitions. Formula (49) represents the representation matrix of the action that amplifies $\delta L$ during the N repetitions.

$$\delta L \mapsto c \cdot sspc_{L^{\text{ideal}}}(\delta L) + N \cdot ssp_{L^{\text{ideal}}}(\delta L) \tag{47}$$

$$\text{sspc}_{L^{\text{ideal}}} \tag{48}$$

$$\text{ssp}_{L^{\text{ideal}}} \tag{49}$$

Lastly, for the error amplification circuit in which the quantum gate sequence is repeated N times, the information processing apparatus 100 calculates the action on the generator errors by integrating the action of the combination of the quantum gates and the action of the repeated execution of the quantum gate sequence. To this end, the information processing apparatus 100 generates the representation matrix of the action of the combination and the representation matrix of the action of the repeated execution in the manner described above, and multiplies the representation matrix of the action of the combination by the representation matrix of the action of the repeated execution from the left. As the representation matrix of the action of the repeated execution, for example, the matrix of Formula (49) that is proportional to the repetition count N is used.

In the manner described above, the information processing apparatus 100 linearly approximates the amplification action of the error amplification circuit on the generator errors. The amplification action calculated here is an action in the space of generators. In numerical optimization using the objective function F(v), the information processing apparatus 100 transforms an action in the generator space into an action in the space of the probability distributions of measurement values.

Here, the information processing apparatus 100 generates a transformation matrix by rearranging the elements of the representation matrices of the initialization $\rho$ and measurement $\Pi$ used in the experiment, and multiplies the representation matrix of the error amplification circuit by the transformation matrix from the left. The representation matrices of the initialization $\rho$ and measurement $\Pi$ used here contain known or assumed errors related to $\rho$ and $\Pi$, and may sometimes be referred to as model values. By doing so, the matrix $C_{i,k}$ included in the objective function F(v) is calculated. In addition, by applying the matrix $C_{i,k}$ to the errors of the non-evaluation target generators, the vector $b_{i,k}$ is calculated.

The following describes an improvement in the linear approximation of step #2. The linear approximation of the action of the quantum gate sequence uses the linear map cml of Formula (29) and the linear map cmr of Formula (30). These linear maps cml and cmr include the reciprocal of the coefficient $l_{jk}$ defined by Formula (33).

Here, there exists a quantum gate that has eigenvalues $a_j$ and $a_k$ whose generators have different ideal values and in which the $a_j$-power and $a_k$-power of e yield the same value. In the case where the eigenvalues $a_j$ and $a_k$ are complex numbers, the $a_j$-power and $a_j$-power of e may become identical as represented by Formula (50). An example of such a quantum gate is a 180-degree rotation gate ($\pi$ pulse gate).

In this case, $l_{jk}$ equals 0, its reciprocal is infinite, and the values of the linear maps cml and cmr are not calculated. This indicates that at the points corresponding to the above generators in the generator space, the differential maps of the exponential maps have a zero eigenvalue. Such s point in the generator space may be referred to as s singularity or a critical point. It may also be said that at a singularity, the linear approximation of the action of the quantum gate sequence breaks down. In the case where the quantum gate sequence includes a quantum gate corresponding to a singularity or in the case where a composite quantum gate corresponding to a singularity is generated during the combining process, the above-described linear approximation method fails to calculate the action of the error amplification circuit.

$$e^{a_j - a_k} - 1 = 0 \iff e^{a_j} = e^{a_k} \qquad (50)$$

To deal with this, in the second embodiment, the information processing apparatus 100 changes the definition of generator errors to avoid performing the linear approximation using the linear maps cml and cmr. As the definition of the quantum gate G, the information processing apparatus 100 uses Formula (51) instead of Formula (5). The second matrix exponential on the right-hand side is the matrix exponential of the ideal value of the generator, and results in a unitary matrix. A unitary matrix is a matrix U with the property defined by Formula (52). The product of a unitary matrix and its adjoint matrix results in the identity matrix. The first matrix exponential on the right-hand side is the matrix exponential of the generator error $\delta L'$.

$$G = e^{\delta L'} e^{L^{\mathrm{ideal}}} \qquad (51)$$

$$U^{\dagger} U = U U^{\dagger} = I \qquad (52)$$

The information processing apparatus 100 estimates the generator error $\delta L'$ defined by Formula (51) for an evaluation-target quantum gate. The generator error $\delta L'$ is different from the generator error $\delta L$ defined by Formula (5). According to the definition of Formula (51), an estimated value different from that obtained with Formula (5) is obtained. However, the generator errors $\delta L$ and $\delta L'$ are both indicators for the error of the quantum gate G. The user may use the calculated generator error $\delta L'$ as it is in order to calibrate the quantum computer. Alternatively, the user may convert the generator error $\delta L'$ into the generator error $\delta L$ for use in the calibration of the quantum computer.

The information processing apparatus 100 modifies Formula (39) to Formula (53) for combining the quantum gates $G_1$ and $G_2$ included in the quantum gate sequence. This combining does not use any linear map dcl, dcr, cml, or cmr. A matrix $U_1$ is a unitary matrix representing the ideal value of the quantum gate $G_1$ and corresponds to the matrix exponential of the ideal value of the generator $L_1$. A matrix $U_2$ is a unitary matrix representing the ideal value of the quantum gate $G_2$ and corresponds to the matrix exponential of the ideal value of the generator $L_2$. The transformations in Formula (53) utilize the condition that the matrices $U_1$ and $U_2$ are unitary matrices.

$$G_2 G_1 = e^{\delta L_2'} e^{L_2^{\text{ideal}}} e^{\delta L_1'} e^{L_1^{\text{ideal}}} = e^{\delta L_2'} U_2 e^{\delta L_1'} U_1$$
$$= e^{\delta L_2'} U_2 e^{\delta L_1'} U_2^\dagger U_2 U_1 = e^{\delta L_2'} e^{U_2 \delta L_1' U_2^\dagger} U_2 U_1 \qquad (53)$$

The composite quantum gate represented by Formula (53) is approximated as given by Formula (54). The approximation of Formula (54) utilizes the condition that the generator errors $\delta L_1$' and $\delta L_2$' are very small compared to the matrices $U_1$ and $U_2$. The ideal value of the composite quantum gate is the product of the matrices $U_1$ and $U_2$. The error of the composite quantum gate is expressed using the generator errors $\delta L_1$' and $\delta L_2$' and the matrix $U_2$. The error of the composite quantum gate is represented as the matrix exponential of what is obtained by transforming the generator error $\delta L_1$' using the matrix $U_2$ and its adjoint matrix and adding the generator error $\delta L_2$' to the transformation result.

$$G_2 G_1 \approx e^{\delta L_2' + U_2 \delta L_1' U_2^\dagger} U_2 U_1 \qquad (54)$$

The quantum gates included in the quantum gate sequence are combined regardless of whether a matrix corresponding to a singularity appears during the calculation process for the combining. Since neither the linear map cml nor cmr is used, it is possible to continue combining the quantum gates even if a matrix corresponding to a singularity appears. The information processing apparatus 100 obtains a composite quantum gate corresponding to the entire quantum gate sequence by applying the linear approximation of Formulae (53) and (54) to the quantum gate sequence, sequentially from the first to the last quantum gate thereof.

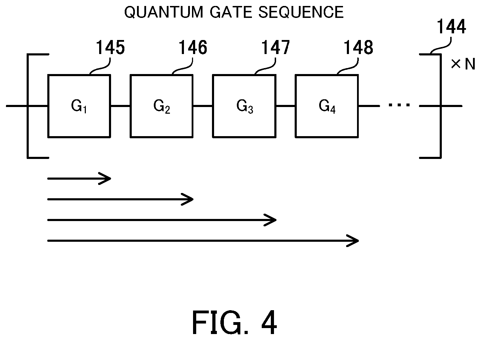

FIG. 4 illustrates an example of combining quantum gates included in a quantum gate sequence.

A quantum gate sequence 144 includes quantum gates 145, 146, 147, and 148 in order from the beginning. First, the information processing apparatus 100 multiplies the quantum gate 145 by the quantum gate 146 to combine them. More specifically, the information processing apparatus 100 multiplies the representation matrix of the quantum gate 145 by the representation matrix of the quantum gate 146 from the left.

Then, the information processing apparatus 100 multiplies the composite quantum gate of the quantum gates 145 and 146 by the quantum gate 147 to combine them. More specifically, the information processing apparatus 100 multiplies the representation matrix of the composite quantum gate by the representation matrix of the quantum gate 147 from the left. Then, the information processing apparatus 100 multiplies the composite quantum gate of the quantum gates 145, 146, and 147 by the quantum gate 148 to combine them. More specifically, the information processing apparatus 100 multiplies the representation matrix of the composite quantum gate by the representation matrix of the quantum gate 148 from the left. In this manner, the information processing apparatus 100 obtains the composite quantum gate representing the entire quantum gate sequence 144.

After that, the information processing apparatus 100 obtains a matrix representing the action of the execution of N repetitions of the composite quantum gate representing the entire quantum gate sequence. The combining result of the quantum gate sequence is expressed in the form of $e^{\delta L'} U$, where U denotes a unitary matrix representing the ideal value of the composite quantum gate and $\delta L$' denotes the generator error of the composite quantum gate.

The information processing apparatus 100 calculates the eigenvalues of the generator L of the matrix U by eigenvalue decomposition or spectral decomposition and determines whether the generator L corresponds to a singularity. In the case where the calculated eigenvalues include eigenvalues satisfying Formula (50), the generator L is determined to correspond to a singularity. In the case where the calculated eigenvalues do not include eigenvalues satisfying Formula (50), on the other hand, the generator L is determined not to correspond to a singularity. The information processing apparatus 100 approximates the action of the repeated execution with an approximation method that depends on whether the generator L corresponds to a singularity.

In the case where the generator L does not correspond to a singularity, the information processing apparatus 100 linearly approximates the action of the repeated execution as given by Formula (55). The approximation of Formula (55) uses the first term on the right-hand side of Formula (37). Since the generator L does not correspond to a singularity, the linear map cml is calculatable. Thus, the action applied to the generator error $\delta L$' by the repeated execution of the composite quantum gate is defined using the linear map cml and the repetition count N. As a matrix used for generating the above-described matrix $C_{i,k}$, for example, a matrix that acts on the generator error $\delta L$' and is proportional to the repetition count N is extracted.

$$\left[ e^{\delta L'} U \right]^N = \left[ e^{\delta L'} e^{L^{\text{ideal}}} \right]^N \approx \left[ e^{L^{\text{ideal}} + \text{cml}_{L^{\text{ideal}}} (\delta L')} \right]^N \qquad (55)$$

In the case where the generator L corresponds to a singularity, on the other hand, the information processing apparatus 100 employs an approximation method that does not use the linear map cml. To simplify the approximation calculation, the information processing apparatus 100 assumes that the repetition count N is even. In addition, the information processing apparatus 100 assumes that the matrix U is equal to its adjoint matrix, as represented by Formula (56). A quantum gate satisfying Formula (56) is a 180-degree rotation gate. Therefore, the information processing apparatus 100 considers a 180-degree rotation gate as a typical composite quantum gate in which the generator L corresponds to a singularity.

In this connection, the following approximation method may be extended so as to apply to the case where the repetition count N is odd. Even in the case where the matrix U does not precisely satisfy Formula (56) and the composite quantum gate is not exactly a 180-degree rotation gate, the information processing apparatus 100 may still employ the following approximation method for the approximation calculation.

$$U = U^\dagger \qquad (56)$$

In the case where the generator L corresponds to a singularity, the information processing apparatus 100 linearly approximates the action of the repeated execution as given by Formula (57). The transformations in Formula (57) utilize the condition that the matrix U satisfies Formula (56). In addition, the transformations in Formula (57) utilize the condition that the matrix U is a unitary matrix. Furthermore, the approximation in Formula (57) utilizes the condition that the generator error $\delta$L' is very small compared to the matrix U.

$$\left[ e^{\delta L'} U \right]^N = \left[ e^{\delta L'} U e^{\delta L'} U \right]^{N/2} = \left[ e^{\delta L'} U e^{\delta L'} U^\dagger \right]^{N/2}$$
$$= \left[ e^{\delta L'} e^{U \delta L' U^\dagger} \right]^{N/2} \approx \left[ e^{\delta L' + U \delta L' U^\dagger} \right]^{N/2} \qquad (57)$$

Finally, the N repetitions of the composite quantum gate represented by Formula (57) are approximated as given by Formula (58). That is, the action applied to the generator error $\delta$L' by the repeated execution of the composite quantum gate is defined using the matrix U, its adjoint matrix, and the repetition count N. Since neither linear map cml nor cmr is used, the linear approximation of the action of the repeated execution is executable even in the case where the composite quantum gate has a singularity. For example, as a matrix used for generating the above-described matrix $C_{i,k}$, a matrix that acts on the generator error $\delta$L' and is proportional to the repetition count N is extracted.

$$\left[ e^{\delta L'} U \right]^N \approx e^{\frac{N}{2} \left( \delta L' + U \delta L' U^\dagger \right)} \qquad (58)$$

The following describes numerical examples of the matrices used in the above-described calculations. Consider here a single-qubit system with d = 2. First, 2-by-2 matrices $\sigma_0$, $\sigma_1$, $\sigma_2$, and $\sigma_3$ called Pauli matrices are defined as given by Formula (59). Using these matrices $\sigma_0$, $\sigma_1$, $\sigma_2$, and $\sigma_3$, a Pauli matrix basis given by Formula (60) is selected as the basis for the matrix representations of quantum gates and generators.

$$\sigma_0 = \begin{bmatrix} 1 & 0 \\ 0 & 1 \end{bmatrix}, \ \sigma_1 = \begin{bmatrix} 0 & 1 \\ 1 & 0 \end{bmatrix}, \ \sigma_2 = \begin{bmatrix} 0 & -i \\ i & 0 \end{bmatrix}, \ \sigma_3 = \begin{bmatrix} 1 & 0 \\ 0 & -1 \end{bmatrix} \qquad (59)$$

$$B_\alpha = \sigma_\alpha / \sqrt{2}, \ \alpha \in \{0, 1, 2, 3\} \qquad (60)$$

In addition, as the basis for the vector representations of quantum gates and generators, a basis S that is defined by a set of $S_1$ to $S_{16}$ of Formulae (61) to (74) is selected. In Formulae (61) to (74), the overline on B means a complex conjugate, and a multiplication operator denotes a tensor product.

$$S_1 = \frac{i}{\sqrt{2}} \left( B_0 \otimes \overline{B}_1 - B_1 \otimes \overline{B}_0 \right) \qquad (61)$$

$$S_2 = \frac{i}{\sqrt{2}}(B_0 \otimes \overline{B}_2 - B_2 \otimes \overline{B}_0) \tag{62}$$

$$S_3 = \frac{i}{\sqrt{2}}(B_0 \otimes \overline{B}_3 - B_3 \otimes \overline{B}_0) \tag{63}$$

$$S_4 = B_1 \otimes \overline{B}_1, \quad S_5 = B_2 \otimes \overline{B}_2, \quad S_6 = B_3 \otimes \overline{B}_3 \tag{64}$$

$$S_7 = \frac{i}{\sqrt{2}}(B_1 \otimes \overline{B}_2 + B_2 \otimes \overline{B}_1) \tag{65}$$

$$S_8 = \frac{i}{\sqrt{2}}(B_1 \otimes \overline{B}_3 + B_3 \otimes \overline{B}_1) \tag{66}$$

$$S_9 = \frac{i}{\sqrt{2}}(B_2 \otimes \overline{B}_3 + B_3 \otimes \overline{B}_2) \tag{67}$$

$$S_{10} = \frac{i}{\sqrt{2}}(B_1 \otimes \overline{B}_2 - B_2 \otimes \overline{B}_1) \tag{68}$$

$$S_{11} = \frac{i}{\sqrt{2}}(B_1 \otimes \overline{B}_3 - B_3 \otimes \overline{B}_1) \tag{69}$$

$$S_{12} = \frac{i}{\sqrt{2}}(B_2 \otimes \overline{B}_3 - B_3 \otimes \overline{B}_2) \tag{70}$$

$$S_{13} = B_0 \otimes \overline{B}_0 \tag{71}$$

$$S_{14} = \frac{1}{\sqrt{2}}(B_0 \otimes \overline{B}_1 + B_1 \otimes \overline{B}_0) \tag{72}$$

$$S_{15} = \frac{1}{\sqrt{2}}(B_0 \otimes \overline{B}_2 + B_2 \otimes \overline{B}_0) \tag{73}$$

$$S_{16} = \frac{1}{\sqrt{2}}(B_0 \otimes \overline{B}_3 + B_3 \otimes \overline{B}_0) \qquad (74)$$

Consider here two quantum gates. A quantum gate $G_1$ is a rotation gate that rotates by 180 degrees around the x-axis and may be denoted by x180 gate. A quantum gate $G_2$ is a rotation gate that rotates by 90 degrees around the z-axis and may be denoted by z90 gate. The quantum gate $G_1$ is an evaluation-target quantum gate, and its generator error is unknown. The quantum gate $G_2$ is a non-evaluation target quantum gate, and its generator error is assumed to be zero.

The information processing apparatus 100 sets two trial quantum gate sequences: one containing only the quantum gate $G_1$, and the other containing the quantum gates $G_1$ and $G_2$ in order. The ideal action of the quantum gate $G_1$ on a quantum state $\rho$ is given by Formula (75). The ideal action of the quantum gate $G_2$ on the quantum state $\rho$ is given by Formula (76). The representation matrices of the quantum gates $G_1$ and $G_2$ under the above Pauli matrix basis B are given by Formula (77). The quantum gate $G_1$ corresponds to a singularity, whereas the quantum gate $G_2$ does not correspond to a singularity. The composite quantum gate $G_2G_1$ corresponds to a singularity.

$$\mathcal{G}_1(\rho) = e^{-i\frac{\pi}{2}\sigma_1} \rho e^{i\frac{\pi}{2}\sigma_1} \qquad (75)$$

$$\mathcal{G}_2(\rho) = e^{-i\frac{\pi}{4}\sigma_3} \rho e^{i\frac{\pi}{4}\sigma_3} \qquad (76)$$

$$G_1 = \begin{bmatrix} 1 & 0 & 0 & 0 \\ 0 & 1 & 0 & 0 \\ 0 & 0 & -1 & 0 \\ 0 & 0 & 0 & -1 \end{bmatrix}, \quad G_2 = \begin{bmatrix} 1 & 0 & 0 & 0 \\ 0 & 0 & -1 & 0 \\ 0 & 1 & 0 & 0 \\ 0 & 0 & 0 & 1 \end{bmatrix} \qquad (77)$$

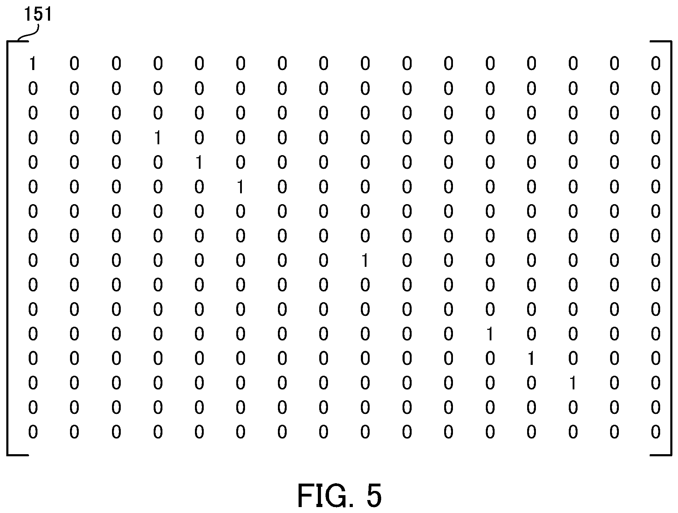

FIG. 5 illustrates an example of the action of a first quantum gate sequence on a generator error.

A matrix 151 represents the action of the quantum gate sequence containing only the quantum gate $G_1$ on the generator error through the combination of quantum gates and the repeated execution of the quantum gate sequence, and indicates components proportional to the repetition count N. The matrix 151 is a representation matrix under the above-described basis S.

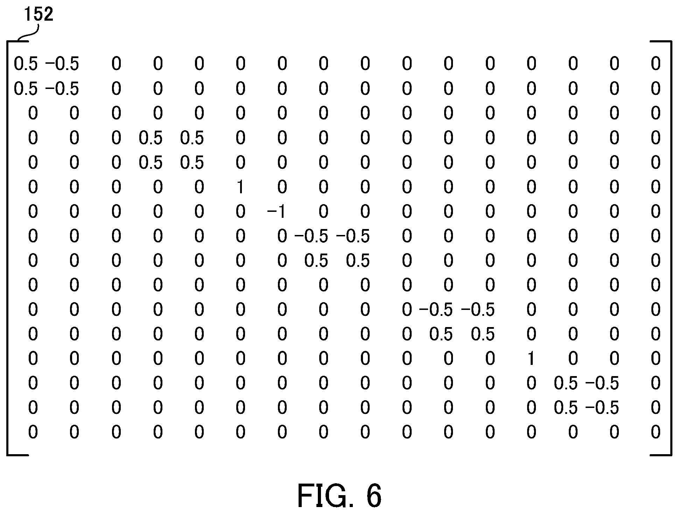

FIG. 6 illustrates an example of the action of a second quantum gate sequence on a generator error.

A matrix 152 represents the action of the quantum gate sequence containing the quantum gates $G_1$ and $G_2$ on the generator error through the combination of quantum gates and the repeated execution of the quantum gate sequence, and indicates components proportional to the repetition count N. The matrix 152 is a representation matrix under the above-described basis S.

In addition, the information processing apparatus 100 selects five different repetition counts N for trials: 2, 4, 8, 16, and 32 times. The information processing apparatus 100 applies these five repetition counts N commonly to the above two quantum gate sequences.

Furthermore, the information processing apparatus 100 prepares four types of initializations $\rho$: x0, y0, z0, and z1. Here, x0 indicates a quantum state corresponding to an eigenvector with eigenvalue +1 of $\sigma_1$. y0 indicates a quantum state corresponding to an eigenvector with eigenvalue +1 of $\sigma_2$. z0 indicates a quantum state corresponding to an eigenvector with eigenvalue +1 of $\sigma_3$. z1 indicates a quantum state corresponding to an eigenvector with eigenvalue -1 of $\sigma_3$. The information processing apparatus 100 applies these four types of initializations $\rho$ commonly to the above two quantum gate sequences.

The information processing apparatus 100 also prepares three types of measurements $\Pi$: x, y, and z. Here, x indicates a projective measurement corresponding to $\sigma_1$. y indicates a projective measurement corresponding to $\sigma_2$. z indicates a projective measurement corresponding to $\sigma_3$. The information processing apparatus 100 applies these three types of measurements $\Pi$ commonly to the above two quantum gate sequences. Therefore, in this example, the total number of combinations of a quantum gate sequence a, a repetition count N, an initialization $\rho$, and a measurement $\Pi$ is calculated as 120 (= 2 × 5 × 4 × 3).

Since a quantum computer probabilistically obtains measurement results, the information processing apparatus 100 obtains a sample a plurality of times for each combination, and generates the above-described experimental data. However, in this numerical simulation, instead of using a quantum computer, the information processing apparatus 100 generates the generator error of the quantum gate $G_1$ using pseudo-random numbers. Using this generator error, the information processing apparatus 100 generates the experimental data representing a true probability distribution.

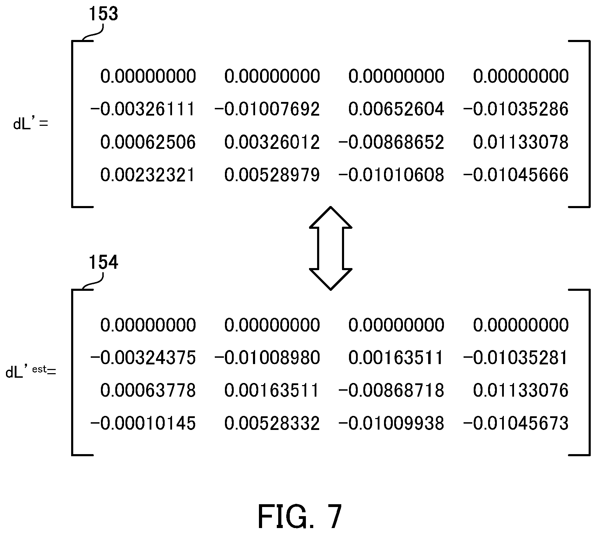

FIG. 7 illustrates an example of correct and estimated values of a generator error.

A matrix 153 represents the correct value of the generator error of the quantum gate $G_1$. The matrix 153 is a representation matrix under the above-described Pauli matrix basis B. The information processing apparatus 100 generates the matrix 153 using pseudo-random numbers. A matrix 154 represents a generator error of the quantum gate $G_1$ estimated from the matrices 151 and 152 and the experimental data. The matrix 154 is a representation matrix under the above-described Pauli matrix basis B. A comparison of the matrix 153 with the matrix 154 reveals that many matrix components are estimated with high accuracy. However, since only the above-described two quantum gate sequences are used, some components of the generator error are not amplified, which affects some matrix components.

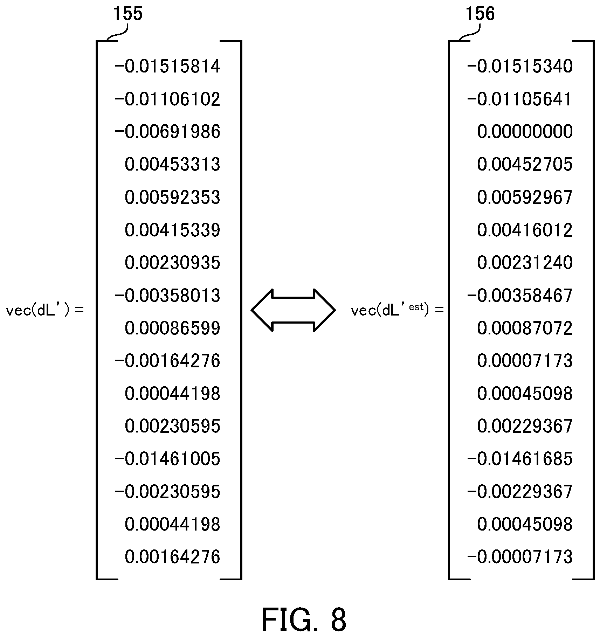

FIG. 8 illustrates an example of correct and estimated values of a vector representation of the generator error.

A vector 155 is a representation vector obtained by transforming the matrix 153 representing the correct value of the generator error, using the above-described basis S. A vector 156 is a representation vector obtained by transforming the matrix 154 representing the estimated value of the generator error, using the above-described basis S. A comparison of the vector 155 with the vector 156 reveals that the third, tenth, and sixteenth components are affected by the lack of quantum gate sequences. The other vector components, on the other hand, are estimated with high accuracy.

The following describes the functions and processing procedure of the information processing apparatus 100.

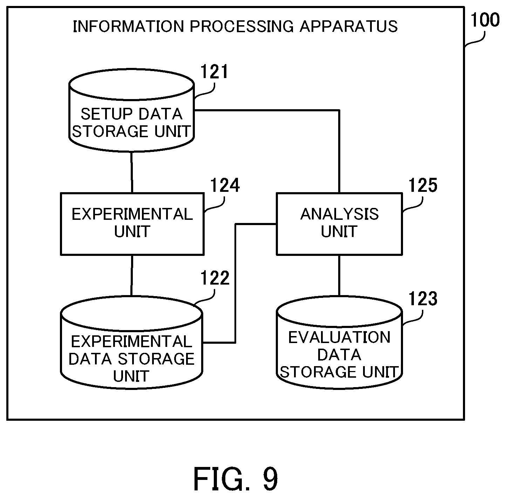

FIG. 9 is a block diagram illustrating an example of the functions of the information processing apparatus.

The information processing apparatus 100 includes a setup data storage unit 121, an experimental data storage unit 122, an evaluation data storage unit 123, an experimental unit 124, and an analysis unit 125. The setup data storage unit 121, experimental data storage unit 122, and evaluation data storage unit 123 are implemented by using, for example, the RAM 102 or HDD 103. The experimental unit 124 and analysis unit 125 are implemented by using, for example, the CPU 101 or GPU 104, and programs.

The setup data storage unit 121 stores setup data. The setup data provides the details of experiments that are conducted using the quantum computer 115. The setup data specifies each individual quantum gate G and its generator L. The setup data also provides the generator errors $\delta L$ of non-evaluation target quantum gates. In addition, the setup data provides quantum gate sequences a and repetition counts N for trials, and also provides initializations $\rho$ and measurements $\Pi$ for the trials.

The experimental data storage unit 122 stores experimental data. The experimental data is generated by aggregating measurement values read from the quantum computer 115. The experimental data represents a frequency distribution f for each combination of a quantum gate sequence a, a repetition count N, an initialization $\rho$, and a measurement $\Pi$. The evaluation data storage unit 123 stores evaluation data. The evaluation data represents the generator errors $\delta L'$ of evaluation-target quantum gates estimated from the setup data and the experimental data. Alternatively, the evaluation data may represent another indicator obtained by converting the generator errors $\delta L'$.

The experimental unit 124 instructs the quantum computer 115 to perform quantum computations based on the setup data stored in the setup data storage unit 121. The experimental unit 124 reads measurement values from the quantum computer 115, aggregates the read measurement values to generate experimental data, and stores the experimental data in the experimental data storage unit 122.

The analysis unit 125 analyzes the setup data stored in the setup data storage unit 121 and the experimental data stored in the experimental data storage unit 122 to estimate the generator errors of the evaluation-target quantum gates. To this end, the analysis unit 125 generates an objective function and searches for generator errors that minimize the value of the objective function using a mathematical programming solver. The analysis unit 125 then generates evaluation data and saves the evaluation data in the evaluation data storage unit 123. In this connection, the analysis unit 125 may display the evaluation data on the display device 111 or send it to another information processing apparatus.

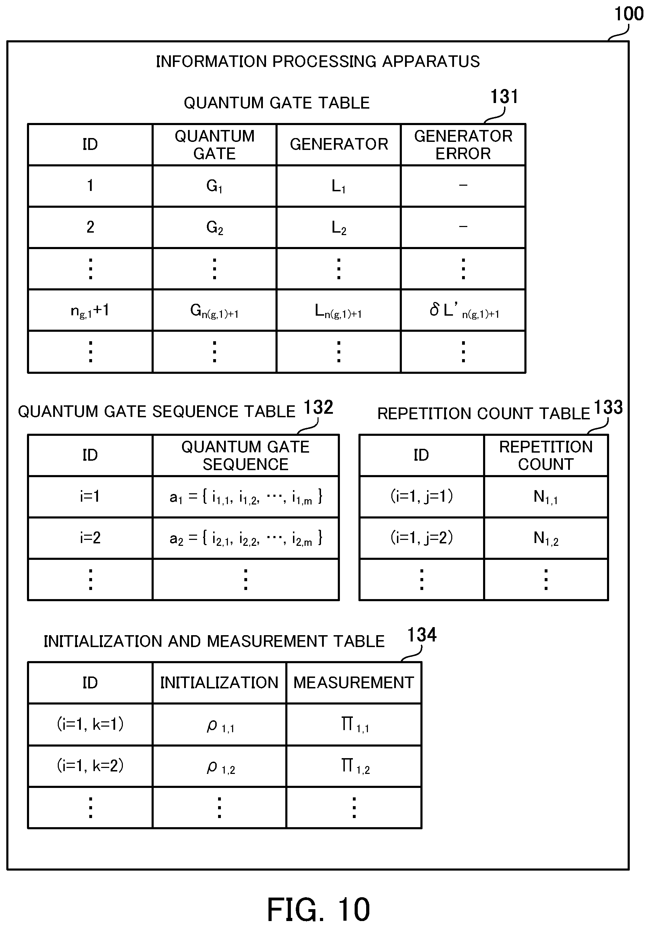

FIG. 10 illustrates an example of the setup data.

The setup data storage unit 121 stores a quantum gate table 131, a quantum gate sequence table 132, a repetition count table 133, and an initialization and measurement table 134.

The quantum gate table 131 associates the identifier of a quantum gate, the representation matrix of the quantum gate, and the representation matrix of a generator with each other. The quantum gate table 131 registers therein $n_g$ different quantum gates. Among these $n_g$ quantum gates, $n_{g,1}$ quantum gates are evaluation targets, and the remaining quantum gates are not evaluation targets. For each non-evaluation target quantum gate, the representation matrix of the generator error is additionally registered.

The quantum gate sequence table 132 associates an identifier i and a quantum gate sequence with each other. A quantum gate sequence of length m is described by arranging m identifiers registered in the quantum gate table 131. The repetition count table 133 associates an identifier combination (i, j) and a repetition count with each other. For each quantum gate sequence registered in the quantum gate sequence table 132, one or more repetition counts (typically two or more) are registered. The repetition count is preferably even. The initialization and measurement table 134 associates an identifier combination (i, k), a representation matrix representing an initialization of a quantum state, and a representation matrix representing a measurement of the quantum state with each other. For each quantum gate sequence registered in the quantum gate sequence table 132, at least one combination of initialization and measurement is registered.

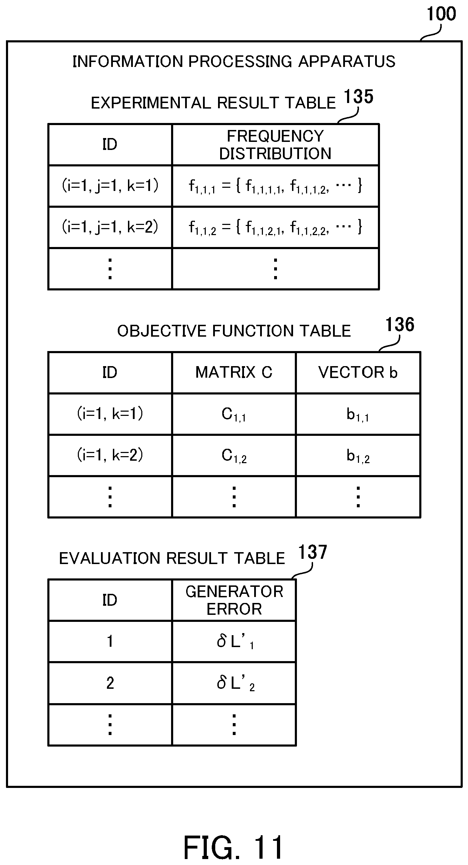

FIG. 11 illustrates an example of experimental data and evaluation data.

The experimental data storage unit 122 stores an experimental result table 135. The experimental result table 135 associates an identifier combination (i, j, k) and a frequency distribution with each other. For each combination of a quantum gate sequence $a_i$, a repetition count $N_{i,j}$, and a combination of initialization and measurement ($\rho_{i,k}$, $\Pi_{i,k}$), one frequency distribution is registered. The frequency distribution is a list of the frequencies of a plurality of measurement values.

The analysis unit 125 generates an objective function table 136. The objective function table 136 associates an identifier combination (i, k), a matrix C, and a vector b with each other. From each combination of a quantum gate sequence $a_i$ and a combination of initialization and measurement ($\rho_{i,k}$, $\Pi_{i,k}$), one matrix C and one vector b are calculated. The objective function indicating the quality of the generator error estimation is defined using the matrices C and vectors b for all combinations of $a_i$ and ($\rho_{i,k}$, $\Pi_{i,k}$).

The evaluation data storage unit 123 stores an evaluation result table 137. The evaluation result table 137 associates the identifier of a quantum gate and the estimated value of its generator error with each other. The same identifiers as used in the quantum gate table 131 are used here. The evaluation result table 137 contains the generator errors of the $n_{g,1}$ evaluation-target quantum gates among the $n_g$ quantum gates.

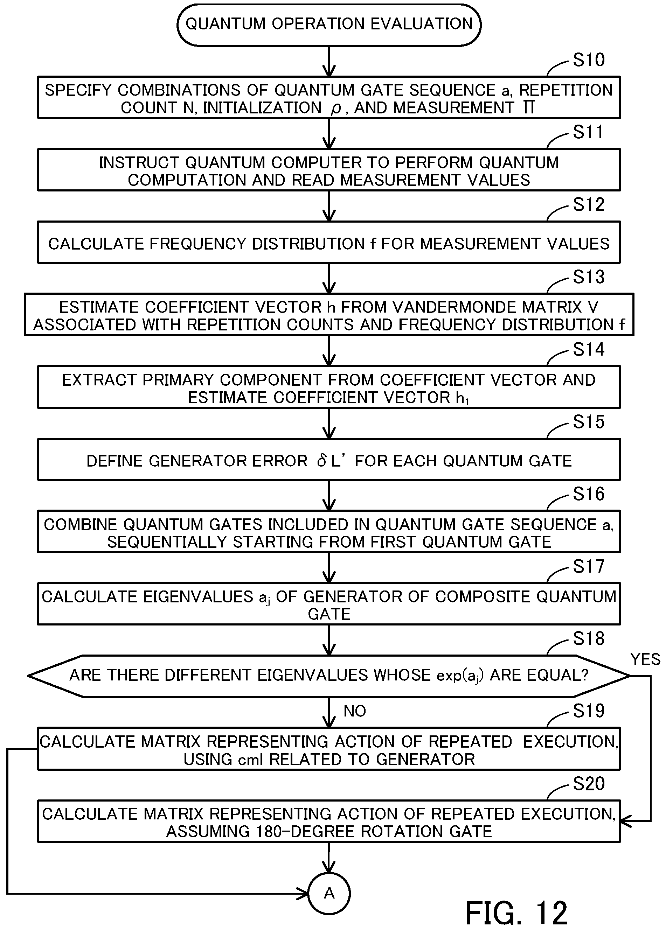

FIG. 12 is a flowchart illustrating an example procedure for quantum operation evaluation.

S10: The experimental unit 124 reads setup data. The experimental unit 124 specifies combinations of a quantum gate sequence a, a repetition count N, an initialization $\rho$, and a measurement $\Pi$ on the basis of setup data.

S11: For each combination specified in step S10, the experimental unit 124 repeats, a plurality of times, a process of instructing the quantum computer 115 to perform quantum computation and reading the measurement values.

S12: For each combination specified in step S10, the experimental unit 124 aggregates the plurality of measurement values read in step S11 to calculate a frequency distribution f.

S13: The analysis unit 125 generates a Vandermonde matrix V associated with the repetition counts N. For each combination of a quantum gate sequence a, an initialization $\rho$, a measurement $\Pi$, and a measurement value x, the analysis unit 125 estimates the coefficient vector h of the series expansion from the Vandermonde matrix V and the frequency of the measurement value x included in the frequency distribution f calculated in step S12.

S14: The analysis unit 125 extracts a primary component from the coefficient vector h obtained in step S13 and estimates the coefficient vector $h_1$ for each combination of a quantum gate sequence a, an initialization $\rho$, and a measurement $\Pi$.

S15: The analysis unit 125 defines a generator error $\delta L'$ for each quantum gate. The generator error $\delta L'$ of an evaluation-target quantum gate corresponds to a variable representing an unknown value. This generator error $\delta L'$ is defined so that the quantum gate is expressed in the form of Formula (51).

S16: The analysis unit 125 combines the quantum gates included in the quantum gate sequence a, sequentially starting from the first quantum gate. To this end, the analysis unit 125 performs approximate calculations as given by Formulae (53) and (54), utilizing the conditions that the ideal value of a quantum gate is represented by a unitary matrix and the generator errors $\delta L'$ are small.

S17: The analysis unit 125 performs spectral decomposition on the ideal value of the generator of the composite quantum gate corresponding to the entire quantum gate sequence to calculate eigenvalues $a_j$.

S18: The analysis unit 125 compares the values of the exponential functions $\exp(a_j)$ for the different eigenvalues $a_j$ calculated in step S17. The analysis unit 125 determines whether there is a pair of eigenvalues whose $\exp(a_j)$ are equal. In this connection, if the difference in $\exp(a_j)$ is less than a threshold, the analysis unit 125 may take these $\exp(a_j)$ to be equal. If such a pair of eigenvalues is found, the process proceeds to step S20; otherwise, the process proceeds to step S19.

S19: The analysis unit 125 calculates the linear map cml related to the ideal value of the generator of the composite quantum gate. Using the calculated linear map cml, the analysis unit 125 calculates a matrix representing the action applied to the generator error $\delta L'$ by repeated execution, as given by Formula (55). The process then proceeds to step S21.

S20: Assuming that the composite quantum gate is a 180-degree rotation gate, the analysis unit 125 calculates a matrix representing the action applied to the generator error $\delta L'$ by the repeated execution, as given by Formulae (57) and (58). At this time, the analysis unit 125 utilizes the conditions that the ideal value of the composite quantum gate is represented by a unitary matrix and satisfies Formula (56) and that the generator error $\delta L'$ is small.

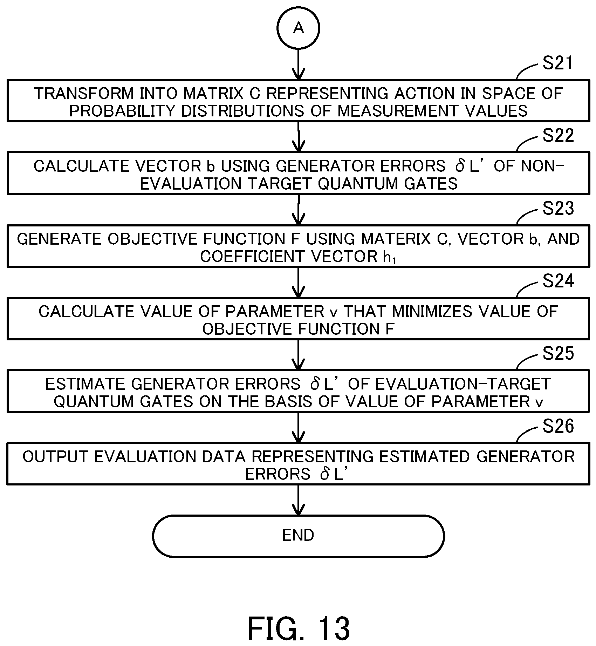

FIG. 13 is a flowchart (continued) illustrating the example procedure for the quantum operation evaluation.

S21: The analysis unit 125 transforms the matrix calculated in step S19 or S20 into a matrix C representing the action in the space of probability distributions of the measurement values, using the initialization $\rho$ and measurement $\Pi$.

S22: The analysis unit 125 calculates a vector b using the known generator errors $\delta L'$ of the non-evaluation target quantum gates. The analysis unit 125 may execute steps S15 to S22, in parallel with or before steps S11 to S14. In addition, the analysis unit 125 may reuse a matrix C and a vector b previously calculated in the quantum tomography.

S23: The analysis unit 125 generates an objective function F using the matrix C obtained in step S21, the vector b obtained in step S22, and the coefficient vector $h_1$ obtained in step S14.

S24: The analysis unit 125 calculates a value of the parameter v that minimizes the value of the objective function F generated in step S23, using a mathematical programming solver.

S25: The analysis unit 125 estimates the generator errors δL' of the evaluation-target quantum gates on the basis of the value of the parameter v calculated in step S24.

S26: The analysis unit 125 generates evaluation data representing the generator errors δL' estimated in step S25 and outputs the evaluation data.

Note that a quantum gate G with an error may be defined using a generator error δL", instead of the generator error δL', as given by Formula (78). In the case of using the generator error δL', the unitary matrix U representing the ideal value of the quantum gate is multiplied by the matrix exponential of the generator error δL' from the left. This may be interpreted as the generator error being decomposed on the left side. In the case of using the generator error δL", on the other hand, the unitary matrix U is multiplied by the matrix exponential of δL" from the right. This may be interpreted as the generator error being decomposed on the right side.

There are cases that the generator error δL" does not match the generator error δL or δL'. However, the information processing apparatus 100 is able to evaluate the generator error δL" with the same method as used for the generator error δL'. The information processing apparatus 100 may output the generator error δL", instead of or in addition to the generator error δL'. Furthermore, the information processing apparatus 100 may convert the generator error δL" into the generator error δL. The information processing apparatus 100 may also use the estimated generator error δL" to calibrate the quantum computer 115.

$$G = e^{L^{\mathrm{ideal}} + \delta L} = e^{\delta L'} U = U e^{\delta L''} \qquad (78)$$

The relationship of Formula (79) using the unitary matrix U holds between the generator error δL" and the generator error δL. In addition, using the linear map dcl, the relationship of Formula (80) holds between the generator error δL' and the generator error δL within the range of the first-order approximation. Similarly, using the linear map dcr, the relationship of Formula (81) holds between the generator error δL" and the generator error δL within the range of the first-order approximation.

$$\delta L'' = U^\dagger \delta L\, U \qquad (79)$$

$$\delta L' = \mathrm{dcl}_L(\delta L) + O(||\delta L||^2) \qquad (80)$$

$$\delta L'' = \mathrm{dcr}_L(\delta L) + O(||\delta L||^2) \qquad (81)$$

Therefore, by replacing the above-described δL' with dcl(δL), a linear approximation with respect to δL is achieved. Therefore, the evaluation method of evaluating δL' is usable as an evaluation method of evaluating δL. Similarly, by replacing δL" with dcr(δL), a linear approximation with respect to δL is achieved. Therefore, the evaluation method of evaluating δL" is usable as an evaluation method of evaluating δL.

As described above, the information processing apparatus 100 of the second embodiment estimates the errors of quantum gates within the quantum computer 115, using the quantum tomography. That is, the information processing apparatus 100 is able to efficiently estimate the errors of the plurality of quantum gates collectively. Furthermore, the information processing apparatus 100 causes the quantum computer 115 to execute an error amplification circuit in which the same quantum gate sequence is repeated. As a result, the very small errors of the quantum gates are amplified, which contributes to enhancing the accuracy of estimating the errors from experimental data.

In addition, the user is able to adjust the values of the control parameters within the quantum computer 115 on the basis of the estimated errors, which improves the accuracy of the quantum operations performed by the quantum computer 115. The information processing apparatus 100 also transforms quantum gates into generators and linearly approximates the action of the error amplification circuit on the generator errors. This reduces the computational load of the data analysis and improves the numerical stability of the estimated errors.

In addition, the information processing apparatus 100 defines the generator error of a quantum gate such that the quantum gate is represented as the product of a unitary matrix representing the ideal value of the quantum gate and the matrix exponential of the generator error. Then, utilizing the property of the unitary matrix and the condition that the generator error is very small, the information processing apparatus 100 combines quantum gates without using either linear map cml or cmr. This enables the information processing apparatus 100 to complete the combining process even if a matrix corresponding to a singularity appears during the combining process, which expands the types of quantum gates that is combinable.

In addition, the information processing apparatus 100 calculates the action of the repeated execution of the composite quantum gate with an approximation method that depends on whether the ideal value of the composite quantum gate corresponds to a singularity. In the case where the ideal value of the composite quantum gate does not correspond to a singularity, the information processing apparatus 100 calculates the action of the repeated execution with the original approximation method using the linear map cml. This approach enhances the approximation accuracy.

In the case where the ideal value of the composite quantum gate corresponds to a singularity, on the other hand, the information processing apparatus 100 calculates the action of the repeated execution without using the linear map cml, utilizing the property of the unitary matrix and the conditions that the generator errors are very small and the unitary matrix represents a 180-degree rotation gate. This enables the information processing apparatus 100 to complete the approximation calculations while avoiding the effects of singularities, which expands the types of quantum gates to which the linear approximation is applicable.

In one aspect, the evaluation of errors of quantum gates is streamlined.

In any of the above aspects, the various features may be implemented in hardware, or as software modules running on one or more processors/computers.

The invention also provides a computer program in accordance with independent claim 1. Advantageous embodiments are provided in accordance with the dependent claims.

A computer program embodying the invention may be stored on a non-transitory computer-readable medium, or it could, for example, be in the form of a signal such as a downloadable data signal provided from an Internet website, or it could be in any other form.

**Claims**

1. A computer program that causes a computer to perform a process comprising:

    obtaining a plurality of measurement values of at least one qubit of a quantum computer, measured after the quantum computer executes a quantum gate sequence (13) on the at least one qubit a plurality of repetitions, the quantum gate sequence including a first quantum gate (13a) and a second quantum gate (13b);
    defining, in representing the first quantum gate as a product of a first matrix (15a) representing an ideal value of the first quantum gate and a matrix exponential of a second matrix (15b) representing an error occurring during execution of the first quantum gate by the quantum computer, a variable representing the second matrix;
    generating a function (16) that linearly approximates an effect of the error on the plurality of measurement values, by approximating a composite quantum gate that is a combination of the first quantum gate and the second quantum gate by a product of the first matrix, a third matrix (15c) representing an ideal value of the second quantum gate, and a matrix exponential of a transformation result of transforming a value of the variable using the third matrix; and
    estimating the error using the function and the measurement data, wherein the transformation result is generated using a product of an adjoint matrix ($U^{\dagger}_2$) of the third matrix, the value ($\delta L'_1$) of the variable, and the third matrix ($U_2$).

2. The computer program according to claim 1, wherein

    the second quantum gate is represented as a product of the third matrix ($U_2$) and a matrix exponential of a fourth matrix ($\delta L'_2$) representing another error occurring during execution of the second quantum gate by the quantum computer, and
    the transformation result is generated by adding the fourth matrix to a product of an adjoint matrix ($U^{\dagger}_2$) of the third matrix, the value ($\delta L'_1$) of the variable, and the third matrix.

3. The computer program according to claim 1, or 2, wherein

    the quantum gate sequence is represented, using a result of the approximating of the composite quantum gate, as a product of a fifth matrix (U) and a matrix exponential of a sixth matrix ($\delta L'$) defined based on the transformation result, the fifth matrix being generated from a product of the first matrix and the third matrix, and

the generating of the function includes approximating repeated execution of the quantum gate sequence by a matrix exponential of an other transformation result of transforming the sixth matrix using the fifth matrix and a number of repetitions (N) of the quantum gate sequence.

4. The computer program according to claim 3, wherein the other transformation result is generated by adding the sixth matrix to a product of an adjoint matrix ($U^\dagger$) of the fifth matrix, the sixth matrix ($\delta L'$), and the fifth matrix (U) and multiplying a result of the adding by half the number of repetitions (N).

5. The computer program according to claim 1, or 2, wherein

   the quantum gate sequence is represented, using a result of the approximating of the composite quantum gate, as a product of a fifth matrix (U) and a matrix exponential of a sixth matrix ($\delta L'$) defined based on the transformation result, the fifth matrix being generated from a product of the first matrix and the third matrix, and
   the generating of the function includes calculating a plurality of eigenvalues (a) of a matrix logarithm (L) of the fifth matrix, and approximating repeated execution of the quantum gate sequence with an approximation method that depends on whether the plurality of eigenvalues include different eigenvalues whose exponential functions have a same value.

6. A quantum operation evaluation method executed by a computer, the quantum operation evaluation method comprising:

   obtaining a plurality of measurement values of at least one qubit of a quantum computer, measured after the quantum computer executes a quantum gate sequence (13) on the at least one qubit a plurality of repetitions, the quantum gate sequence including a first quantum gate (13a) and a second quantum gate (13b);
   defining, in representing the first quantum gate as a product of a first matrix (15a) representing an ideal value of the first quantum gate and a matrix exponential of a second matrix (15b) representing an error occurring during execution of the first quantum gate by the quantum computer, a variable representing the second matrix;
   generating a function (16) that linearly approximates an effect of the error on the plurality of measurement values, by approximating a composite quantum gate that is a combination of the first quantum gate and the second quantum gate by a product of the first matrix, a third matrix (15c) representing an ideal value of the second quantum gate, and a matrix exponential of a transformation result of transforming a value of the variable using the third matrix; and
   estimating the error using the function and the measurement data, wherein the transformation result is generated using a product of an adjoint matrix ($U^\dagger_2$) of the third matrix, the value ($\delta L'_1$) of the variable, and the third matrix ($U_2$).

7. An information processing apparatus comprising:

   storage means (11) for storing a plurality of measurement values of at least one qubit of a quantum computer, measured after the quantum computer executes a quantum gate sequence (13) on the at least one qubit a plurality of repetitions, the quantum gate sequence including a first quantum gate (13a) and a second quantum gate (13b); and
   processing means (12) for:

      defining, in representing the first quantum gate as a product of a first matrix (15a) representing an ideal value of the first quantum gate and a matrix exponential of a second matrix (15b) representing an error occurring during execution of the first quantum gate by the quantum computer, a variable representing the second matrix;
      generating a function (16) that linearly approximates an effect of the error on the plurality of measurement values, by approximating a composite quantum gate that is a combination of the first quantum gate and the second quantum gate by a product of the first matrix, a third matrix (15c) representing an ideal value of the second quantum gate, and a matrix exponential of a transformation result of transforming a value of the variable using the third matrix; and
      estimating the error using the function and the measurement data, wherein the transformation result is generated using a product of an adjoint matrix ($U^\dagger_2$) of the third matrix, the value ($\delta L'_1$) of the variable, and the third matrix ($U_2$).

**Patentansprüche**

1.  Computerprogramm, das einen Computer veranlasst, einen Prozess auszuführen, umfassend:

    Erhalten einer Vielzahl von Messwerten von mindestens einem Qubit eines Quantencomputers, gemessen nachdem der Quantencomputer eine Quantengattersequenz (13) an dem mindestens einen Qubit eine Vielzahl von Wiederholungen ausführt, wobei die Quantengattersequenz ein erstes Quantengatter (13a) und ein zweites Quantengatter (13b) beinhaltet;

    Definieren, beim Darstellen des ersten Quantengatters als ein Produkt aus einer ersten Matrix (15a), die einen Idealwert des ersten Quantengatters darstellt, und einem Matrixexponential einer zweiten Matrix (15b), die einen Fehler darstellt, der während der Ausführung des ersten Quantengatters durch den Quantencomputer auftritt, einer Variablen, die die zweite Matrix darstellt;

    Erzeugen einer Funktion (16), die eine Auswirkung des Fehlers auf die Vielzahl von Messwerten linear approximiert, durch Approximieren eines zusammengesetzten Quantengatters, das eine Kombination des ersten Quantengatters und des zweiten Quantengatters ist, durch ein Produkt aus der ersten Matrix, einer dritten Matrix (15c), die einen Idealwert des zweiten Quantengatters darstellt, und einem Matrixexponential eines Transformationsergebnisses des Transformierens eines Wertes der Variablen unter Verwendung der dritten Matrix; und

    Schätzen des Fehlers unter Verwendung der Funktion und der Messdaten, wobei das Transformationsergebnis unter Verwendung eines Produkts aus einer adjungierten Matrix ($U^\dagger_2$) der dritten Matrix, dem Wert ($\delta L'_1$) der Variablen und der dritten Matrix ($U_2$) erzeugt wird.

2.  Computerprogramm nach Anspruch 1, wobei

    das zweite Quantengatter als ein Produkt aus der dritten Matrix ($U_2$) und einem Matrixexponential einer vierten Matrix ($\delta L'_2$), die einen anderen Fehler darstellt, der während der Ausführung des zweiten Quantengatters durch den Quantencomputer auftritt, dargestellt wird, und

    das Transformationsergebnis durch Addieren der vierten Matrix zu einem Produkt aus einer adjungierten Matrix ($U^\dagger_2$) der dritten Matrix, dem Wert ($\delta L'_1$) der Variablen und der dritten Matrix erzeugt wird.

3.  Computerprogramm nach Anspruch 1 oder 2, wobei

    die Quantengattersequenz unter Verwendung eines Ergebnisses des Approximierens des zusammengesetzten Quantengatters als ein Produkt aus einer fünften Matrix (U) und einem Matrixexponential einer sechsten Matrix ($\delta L'$), die auf Grundlage des Transformationsergebnisses definiert ist, dargestellt wird, wobei die fünfte Matrix aus einem Produkt der ersten Matrix und der dritten Matrix erzeugt wird, und

    das Erzeugen der Funktion ein Approximieren einer wiederholten Ausführung der Quantengattersequenz durch ein Matrixexponential eines anderen Transformationsergebnisses des Transformierens der sechsten Matrix unter Verwendung der fünften Matrix und einer Anzahl der Wiederholungen (N) der Quantengattersequenz beinhaltet.

4.  Computerprogramm nach Anspruch 3, wobei das andere Transformationsergebnis durch Addieren der sechsten Matrix zu einem Produkt aus einer adjungierten Matrix ($U^\dagger$) der fünften Matrix, der sechsten Matrix ($\delta L'$) und der fünften Matrix (U) und Multiplizieren eines Ergebnisses des Addierens mit der Hälfte der Anzahl der Wiederholungen (N) erzeugt wird.

5.  Computerprogramm nach Anspruch 1 oder 2, wobei

    die Quantengattersequenz unter Verwendung eines Ergebnisses des Approximierens des zusammengesetzten Quantengatters als ein Produkt aus einer fünften Matrix (U) und einem Matrixexponential einer sechsten Matrix ($\delta L'$), die auf Grundlage des Transformationsergebnisses definiert ist, dargestellt wird, wobei die fünfte Matrix aus einem Produkt der ersten Matrix und der dritten Matrix erzeugt wird, und

    das Erzeugen der Funktion ein Berechnen einer Vielzahl von Eigenwerten (a) eines Matrixlogarithmus (L) der fünften Matrix und ein Approximieren einer wiederholten Ausführung der Quantengattersequenz mit einer Approximationsmethode, die davon abhängt, ob die Vielzahl von Eigenwerten unterschiedliche Eigenwerte beinhaltet, deren Exponentialfunktionen einen gleichen Wert haben, beinhaltet.

6.  Quantenoperationsbewertungsverfahren, das durch einen Computer ausgeführt wird, wobei das Quantenoperationsbewertungsverfahren umfasst:

Erhalten einer Vielzahl von Messwerten von mindestens einem Qubit eines Quantencomputers, gemessen nachdem der Quantencomputer eine Quantengattersequenz (13) an dem mindestens einen Qubit eine Vielzahl von Wiederholungen ausführt, wobei die Quantengattersequenz ein erstes Quantengatter (13a) und ein zweites Quantengatter (13b) beinhaltet;

Definieren, beim Darstellen des ersten Quantengatters als ein Produkt aus einer ersten Matrix (15a), die einen Idealwert des ersten Quantengatters darstellt, und einem Matrixexponential einer zweiten Matrix (15b), die einen Fehler darstellt, der während der Ausführung des ersten Quantengatters durch den Quantencomputer auftritt, einer Variablen, die die zweite Matrix darstellt;

Erzeugen einer Funktion (16), die eine Auswirkung des Fehlers auf die Vielzahl von Messwerten linear approximiert, durch Approximieren eines zusammengesetzten Quantengatters, das eine Kombination des ersten Quantengatters und des zweiten Quantengatters ist, durch ein Produkt aus der ersten Matrix, einer dritten Matrix (15c), die einen Idealwert des zweiten Quantengatters darstellt, und einem Matrixexponential eines Transformationsergebnisses des Transformierens eines Wertes der Variablen unter Verwendung der dritten Matrix; und

Schätzen des Fehlers unter Verwendung der Funktion und der Messdaten, wobei das Transformationsergebnis unter Verwendung eines Produkts aus einer adjungierten Matrix ($U^{\dagger}_2$) der dritten Matrix, dem Wert ($\delta L'_1$) der Variablen und der dritten Matrix ($U_2$) erzeugt wird.

7. Informationsverarbeitungsvorrichtung, umfassend:

Speichermittel (11) zum Speichern einer Vielzahl von Messwerten von mindestens einem Qubit eines Quantencomputers, gemessen nachdem der Quantencomputer eine Quantengattersequenz (13) an dem mindestens einen Qubit eine Vielzahl von Wiederholungen ausführt, wobei die Quantengattersequenz ein erstes Quantengatter (13a) und ein zweites Quantengatter (13b) beinhaltet; und

Verarbeitungsmittel (12) zum:

Definieren, beim Darstellen des ersten Quantengatters als ein Produkt aus einer ersten Matrix (15a), die einen Idealwert des ersten Quantengatters darstellt, und einem Matrixexponential einer zweiten Matrix (15b), die einen Fehler darstellt, der während der Ausführung des ersten Quantengatters durch den Quantencomputer auftritt, einer Variablen, die die zweite Matrix darstellt;

Erzeugen einer Funktion (16), die eine Auswirkung des Fehlers auf die Vielzahl von Messwerten linear approximiert, durch Approximieren eines zusammengesetzten Quantengatters, das eine Kombination des ersten Quantengatters und des zweiten Quantengatters ist, durch ein Produkt aus der ersten Matrix, einer dritten Matrix (15c), die einen Idealwert des zweiten Quantengatters darstellt, und einem Matrixexponential eines Transformationsergebnisses des Transformierens eines Wertes der Variablen unter Verwendung der dritten Matrix; und

Schätzen des Fehlers unter Verwendung der Funktion und der Messdaten, wobei das Transformationsergebnis unter Verwendung eines Produkts aus einer adjungierten Matrix ($U^{\dagger}_2$) der dritten Matrix, dem Wert ($\delta L'_1$) der Variablen und der dritten Matrix ($U_2$) erzeugt wird.

## Revendications

1. Programme informatique qui amène un ordinateur à effectuer un processus comprenant :

l'obtention d'une pluralité de valeurs de mesure d'au moins un bit quantique d'un ordinateur quantique, mesurées après que l'ordinateur quantique exécute une séquence de portes quantiques (13) sur l'au moins un bit quantique une pluralité de répétitions, la séquence de portes quantiques comportant une première porte quantique (13a) et une seconde porte quantique (13b) ;

la définition, en représentant la première porte quantique comme un produit d'une première matrice (15a) représentant une valeur idéale de la première porte quantique et d'une matrice exponentielle d'une deuxième matrice (15b) représentant une erreur survenant lors de l'exécution de la première porte quantique par l'ordinateur quantique, d'une variable représentant la deuxième matrice ;

la génération d'une fonction (16) qui approxime linéairement l'effet de l'erreur sur la pluralité des valeurs de mesure, en approximant une porte quantique composite qui est une combinaison de la première porte quantique et de la seconde porte quantique par un produit de la première matrice, une troisième matrice (15c) représentant une valeur idéale de la seconde porte quantique, et une matrice exponentielle d'un résultat de transformation de la transformation d'une valeur de la variable en utilisant la troisième matrice ; et

l'estimation de l'erreur en utilisant la fonction et des données de mesure, dans lequel le résultat de transformation est généré en utilisant un produit d'une matrice adjointe ($U^\dagger_2$) de la troisième matrice, de la valeur ($\delta L'_1$) de la variable et de la troisième matrice ($U_2$).

2. Programme informatique selon la revendication 1, dans lequel

la seconde porte quantique est représentée comme un produit de la troisième matrice ($U_2$) et d'une matrice exponentielle d'une quatrième matrice ($\delta L'_2$) représentant une autre erreur survenant lors de l'exécution de la seconde porte quantique par l'ordinateur quantique, et

le résultat de transformation est généré par ajout de la quatrième matrice à un produit d'une matrice adjointe ($U^\dagger_2$) de la troisième matrice, de la valeur ($\delta L'_1$) de la variable et de la troisième matrice.

3. Programme informatique selon la revendication 1, ou 2, dans lequel

la séquence de portes quantiques est représentée, en utilisant un résultat de l'approximation de la porte quantique composite, comme un produit d'une cinquième matrice (U) et d'une matrice exponentielle d'une sixième matrice ($\delta L'$) définie en fonction du résultat de transformation, la cinquième matrice étant générée à partir d'un produit de la première matrice et de la troisième matrice, et

la génération de la fonction comporte l'approximation de l'exécution répétée de la séquence de portes quantiques par une matrice exponentielle d'un autre résultat de transformation de la transformation de la sixième matrice en utilisant la cinquième matrice et un nombre de répétitions (N) de la séquence de portes quantiques.

4. Programme informatique selon la revendication 3, dans lequel l'autre résultat de transformation est généré en ajoutant la sixième matrice à un produit d'une matrice adjointe ($U^\dagger$) de la cinquième matrice, la sixième matrice ($\delta L'$) et la cinquième matrice (U) et en multipliant le résultat de l'addition par la moitié du nombre de répétitions (N).

5. Programme informatique selon la revendication 1, ou 2, dans lequel

la séquence de portes quantiques est représentée, en utilisant un résultat de l'approximation de la porte quantique composite, comme un produit d'une cinquième matrice (U) et d'une matrice exponentielle d'une sixième matrice ($\delta L'$) définie en fonction du résultat de transformation, la cinquième matrice étant générée à partir d'un produit de la première matrice et de la troisième matrice, et

la génération de la fonction comporte le calcul d'une pluralité de valeurs propres (a) d'un logarithme matriciel (L) de la cinquième matrice, et l'approximation de l'exécution répétée de la séquence de portes quantiques avec un procédé d'approximation qui dépend du fait que la pluralité de valeurs propres comporte des valeurs propres différentes dont les fonctions exponentielles ont une même valeur.

6. Procédé d'évaluation d'opérations quantiques exécuté par un ordinateur, le procédé d'évaluation d'opérations quantiques comprenant :

l'obtention d'une pluralité de valeurs de mesure d'au moins un bit quantique d'un ordinateur quantique, mesurées après que l'ordinateur quantique exécute une séquence de portes quantiques (13) sur l'au moins un bit quantique une pluralité de répétitions, la séquence de portes quantiques comportant une première porte quantique (13a) et une seconde porte quantique (13b) ;

la définition, en représentant la première porte quantique comme un produit d'une première matrice (15a) représentant une valeur idéale de la première porte quantique et d'une matrice exponentielle d'une deuxième matrice (15b) représentant une erreur survenant lors de l'exécution de la première porte quantique par l'ordinateur quantique, d'une variable représentant la deuxième matrice ;

la génération d'une fonction (16) qui approxime linéairement l'effet de l'erreur sur la pluralité des valeurs de mesure, en approximant une porte quantique composite qui est une combinaison de la première porte quantique et de la seconde porte quantique par un produit de la première matrice, une troisième matrice (15c) représentant une valeur idéale de la seconde porte quantique, et une matrice exponentielle d'un résultat de transformation de la transformation d'une valeur de la variable en utilisant la troisième matrice ; et

l'estimation de l'erreur en utilisant la fonction et des données de mesure, dans lequel le résultat de transformation est généré en utilisant un produit d'une matrice adjointe ($U^\dagger_2$) de la troisième matrice, de la valeur ($\delta L'_1$) de la variable et de la troisième matrice ($U_2$).

7. Appareil de traitement d'informations comprenant :

un moyen de stockage (11) pour stocker une pluralité de valeurs de mesure d'au moins un bit quantique d'un ordinateur quantique, mesurées après que l'ordinateur quantique exécute une séquence de portes quantiques (13) sur l'au moins un bit quantique une pluralité de répétitions, la séquence de portes quantiques comportant une première porte quantique (13a) et une seconde porte quantique (13b) ; et
un moyen de traitement (12) pour :

la définition, en représentant la première porte quantique comme un produit d'une première matrice (15a) représentant une valeur idéale de la première porte quantique et d'une matrice exponentielle d'une deuxième matrice (15b) représentant une erreur survenant lors de l'exécution de la première porte quantique par l'ordinateur quantique, d'une variable représentant la deuxième matrice ;
la génération d'une fonction (16) qui approxime linéairement l'effet de l'erreur sur la pluralité des valeurs de mesure, en approximant une porte quantique composite qui est une combinaison de la première porte quantique et de la seconde porte quantique par un produit de la première matrice, une troisième matrice (15c) représentant une valeur idéale de la seconde porte quantique, et une matrice exponentielle d'un résultat de transformation de la transformation d'une valeur de la variable en utilisant la troisième matrice ; et
l'estimation de l'erreur en utilisant la fonction et des données de mesure, dans lequel le résultat de transformation est généré en utilisant un produit d'une matrice adjointe ($U^{\dagger}_2$) de la troisième matrice, de la valeur ($\delta L'_1$) de la variable et de la troisième matrice ($U_2$).

FIG. 1

**INFORMATION PROCESSING APPARATUS** 100

CPU 101

GPU 104

RAM 102

INPUT INTERFACE 105

HDD 103

MEDIA READER 106

COMMUNI-CATION INTERFACE 107

INTERFACE 108

BUS

DISPLAY DEVICE 111

INPUT DEVICE 112

STORAGE MEDIUM 113

NETWORK 114

**QUANTUM COMPUTER** 115

QUBIT UNIT 116

CONTROL UNIT 117

MEASUREMENT UNIT 118

FIG. 2

141

142          143

×N

I/X$_\pi$      CR$_{+\pi/4}$   X$_\pi$   CR$_{-\pi/4}$   X$_\pi$

ρ                                                      π

Y$_{\pi/2}$    R$_+$                  R$_-$    Y$_\pi$ (Z$_\pi$)    X$_{\pi/2}$

INITIALIZATION              QUANTUM GATE SEQUENCE              MEASUREMENT
CIRCUIT                                                         CIRCUIT

# FIG. 3

QUANTUM GATE SEQUENCE

FIG. 4

151

$$\begin{bmatrix} 1 & 0 & 0 & 0 & 0 & 0 & 0 & 0 & 0 & 0 & 0 & 0 & 0 & 0 & 0 & 0 \\ 0 & 0 & 0 & 0 & 0 & 0 & 0 & 0 & 0 & 0 & 0 & 0 & 0 & 0 & 0 & 0 \\ 0 & 0 & 0 & 0 & 0 & 0 & 0 & 0 & 0 & 0 & 0 & 0 & 0 & 0 & 0 & 0 \\ 0 & 0 & 0 & 1 & 0 & 0 & 0 & 0 & 0 & 0 & 0 & 0 & 0 & 0 & 0 & 0 \\ 0 & 0 & 0 & 0 & 1 & 0 & 0 & 0 & 0 & 0 & 0 & 0 & 0 & 0 & 0 & 0 \\ 0 & 0 & 0 & 0 & 0 & 1 & 0 & 0 & 0 & 0 & 0 & 0 & 0 & 0 & 0 & 0 \\ 0 & 0 & 0 & 0 & 0 & 0 & 0 & 0 & 0 & 0 & 0 & 0 & 0 & 0 & 0 & 0 \\ 0 & 0 & 0 & 0 & 0 & 0 & 0 & 0 & 0 & 0 & 0 & 0 & 0 & 0 & 0 & 0 \\ 0 & 0 & 0 & 0 & 0 & 0 & 0 & 0 & 1 & 0 & 0 & 0 & 0 & 0 & 0 & 0 \\ 0 & 0 & 0 & 0 & 0 & 0 & 0 & 0 & 0 & 0 & 0 & 0 & 0 & 0 & 0 & 0 \\ 0 & 0 & 0 & 0 & 0 & 0 & 0 & 0 & 0 & 0 & 0 & 0 & 0 & 0 & 0 & 0 \\ 0 & 0 & 0 & 0 & 0 & 0 & 0 & 0 & 0 & 0 & 0 & 1 & 0 & 0 & 0 & 0 \\ 0 & 0 & 0 & 0 & 0 & 0 & 0 & 0 & 0 & 0 & 0 & 0 & 1 & 0 & 0 & 0 \\ 0 & 0 & 0 & 0 & 0 & 0 & 0 & 0 & 0 & 0 & 0 & 0 & 0 & 1 & 0 & 0 \\ 0 & 0 & 0 & 0 & 0 & 0 & 0 & 0 & 0 & 0 & 0 & 0 & 0 & 0 & 0 & 0 \\ 0 & 0 & 0 & 0 & 0 & 0 & 0 & 0 & 0 & 0 & 0 & 0 & 0 & 0 & 0 & 0 \end{bmatrix}$$

## FIG. 5

152

$$\begin{bmatrix} 0.5 & -0.5 & 0 & 0 & 0 & 0 & 0 & 0 & 0 & 0 & 0 & 0 & 0 & 0 & 0 & 0 \\ 0.5 & -0.5 & 0 & 0 & 0 & 0 & 0 & 0 & 0 & 0 & 0 & 0 & 0 & 0 & 0 & 0 \\ 0 & 0 & 0 & 0 & 0 & 0 & 0 & 0 & 0 & 0 & 0 & 0 & 0 & 0 & 0 & 0 \\ 0 & 0 & 0 & 0.5 & 0.5 & 0 & 0 & 0 & 0 & 0 & 0 & 0 & 0 & 0 & 0 & 0 \\ 0 & 0 & 0 & 0.5 & 0.5 & 0 & 0 & 0 & 0 & 0 & 0 & 0 & 0 & 0 & 0 & 0 \\ 0 & 0 & 0 & 0 & 0 & 1 & 0 & 0 & 0 & 0 & 0 & 0 & 0 & 0 & 0 & 0 \\ 0 & 0 & 0 & 0 & 0 & 0 & -1 & 0 & 0 & 0 & 0 & 0 & 0 & 0 & 0 & 0 \\ 0 & 0 & 0 & 0 & 0 & 0 & 0 & -0.5 & -0.5 & 0 & 0 & 0 & 0 & 0 & 0 & 0 \\ 0 & 0 & 0 & 0 & 0 & 0 & 0 & 0.5 & 0.5 & 0 & 0 & 0 & 0 & 0 & 0 & 0 \\ 0 & 0 & 0 & 0 & 0 & 0 & 0 & 0 & 0 & 0 & 0 & 0 & 0 & 0 & 0 & 0 \\ 0 & 0 & 0 & 0 & 0 & 0 & 0 & 0 & 0 & 0 & -0.5 & -0.5 & 0 & 0 & 0 & 0 \\ 0 & 0 & 0 & 0 & 0 & 0 & 0 & 0 & 0 & 0 & 0.5 & 0.5 & 0 & 0 & 0 & 0 \\ 0 & 0 & 0 & 0 & 0 & 0 & 0 & 0 & 0 & 0 & 0 & 0 & 1 & 0 & 0 & 0 \\ 0 & 0 & 0 & 0 & 0 & 0 & 0 & 0 & 0 & 0 & 0 & 0 & 0 & 0.5 & -0.5 & 0 \\ 0 & 0 & 0 & 0 & 0 & 0 & 0 & 0 & 0 & 0 & 0 & 0 & 0 & 0.5 & -0.5 & 0 \\ 0 & 0 & 0 & 0 & 0 & 0 & 0 & 0 & 0 & 0 & 0 & 0 & 0 & 0 & 0 & 0 \end{bmatrix}$$

FIG. 6

153

$$dL' = \begin{bmatrix} 0.00000000 & 0.00000000 & 0.00000000 & 0.00000000 \\ -0.00326111 & -0.01007692 & 0.00652604 & -0.01035286 \\ 0.00062506 & 0.00326012 & -0.00868652 & 0.01133078 \\ 0.00232321 & 0.00528979 & -0.01010608 & -0.01045666 \end{bmatrix}$$

154

$$dL'{}_{est} = \begin{bmatrix} 0.00000000 & 0.00000000 & 0.00000000 & 0.00000000 \\ -0.00324375 & -0.01008980 & 0.00163511 & -0.01035281 \\ 0.00063778 & 0.00163511 & -0.00868718 & 0.01133076 \\ -0.00010145 & 0.00528332 & -0.01009938 & -0.01045673 \end{bmatrix}$$

## FIG. 7

$$\text{vec}(dL') = \begin{bmatrix} -0.01515814 \\ -0.01106102 \\ -0.00691986 \\ 0.00453313 \\ 0.00592353 \\ 0.00415339 \\ 0.00230935 \\ -0.00358013 \\ 0.00086599 \\ -0.00164276 \\ 0.00044198 \\ 0.00230595 \\ -0.01461005 \\ -0.00230595 \\ 0.00044198 \\ 0.00164276 \end{bmatrix} \quad \Longleftrightarrow \quad \text{vec}(dL'^{\,est}) = \begin{bmatrix} -0.01515340 \\ -0.01105641 \\ 0.00000000 \\ 0.00452705 \\ 0.00592967 \\ 0.00416012 \\ 0.00231240 \\ -0.00358467 \\ 0.00087072 \\ 0.00007173 \\ 0.00045098 \\ 0.00229367 \\ -0.01461685 \\ -0.00229367 \\ 0.00045098 \\ -0.00007173 \end{bmatrix}$$

155    156

FIG. 8

INFORMATION PROCESSING APPARATUS 100

121
SETUP DATA STORAGE UNIT

124
EXPERIMENTAL UNIT

125
ANALYSIS UNIT

122
EXPERIMENTAL DATA STORAGE UNIT

123
EVALUATION DATA STORAGE UNIT

FIG. 9

100

## INFORMATION PROCESSING APPARATUS

### QUANTUM GATE TABLE

131

| ID | QUANTUM GATE | GENERATOR | GENERATOR ERROR |
|---|---|---|---|
| 1 | $G_1$ | $L_1$ | – |
| 2 | $G_2$ | $L_2$ | – |
| $\vdots$ | $\vdots$ | $\vdots$ | $\vdots$ |
| $n_{g,1}+1$ | $G_{n(g,1)+1}$ | $L_{n(g,1)+1}$ | $\delta L'_{n(g,1)+1}$ |
| $\vdots$ | $\vdots$ | $\vdots$ | $\vdots$ |

### QUANTUM GATE SEQUENCE TABLE 132

| ID | QUANTUM GATE SEQUENCE |
|---|---|
| i=1 | $a_1 = \{ i_{1,1}, i_{1,2}, \cdots, i_{1,m} \}$ |
| i=2 | $a_2 = \{ i_{2,1}, i_{2,2}, \cdots, i_{2,m} \}$ |
| $\vdots$ | $\vdots$ |

### REPETITION COUNT TABLE 133

| ID | REPETITION COUNT |
|---|---|
| (i=1, j=1) | $N_{1,1}$ |
| (i=1, j=2) | $N_{1,2}$ |
| $\vdots$ | $\vdots$ |

### INITIALIZATION AND MEASUREMENT TABLE 134

| ID | INITIALIZATION | MEASUREMENT |
|---|---|---|
| (i=1, k=1) | $\rho_{1,1}$ | $\Pi_{1,1}$ |
| (i=1, k=2) | $\rho_{1,2}$ | $\Pi_{1,2}$ |
| $\vdots$ | $\vdots$ | $\vdots$ |

## FIG. 10

100

## INFORMATION PROCESSING APPARATUS

### EXPERIMENTAL RESULT TABLE 135

| ID | FREQUENCY DISTRIBUTION |
|---|---|
| (i=1, j=1, k=1) | $f_{1,1,1} = \{ f_{1,1,1,1}, f_{1,1,1,2}, \cdots \}$ |
| (i=1, j=1, k=2) | $f_{1,1,2} = \{ f_{1,1,2,1}, f_{1,1,2,2}, \cdots \}$ |
| ⋮ | ⋮ |

### OBJECTIVE FUNCTION TABLE 136

| ID | MATRIX C | VECTOR b |
|---|---|---|
| (i=1, k=1) | $C_{1,1}$ | $b_{1,1}$ |
| (i=1, k=2) | $C_{1,2}$ | $b_{1,2}$ |
| ⋮ | ⋮ | ⋮ |

### EVALUATION RESULT TABLE 137

| ID | GENERATOR ERROR |
|---|---|
| 1 | $\delta L'_1$ |
| 2 | $\delta L'_2$ |
| ⋮ | ⋮ |

## FIG. 11

QUANTUM OPERATION EVALUATION

/S10

SPECIFY COMBINATIONS OF QUANTUM GATE SEQUENCE a, REPETITION COUNT N, INITIALIZATION $\rho$, AND MEASUREMENT $\Pi$

/S11

INSTRUCT QUANTUM COMPUTER TO PERFORM QUANTUM COMPUTATION AND READ MEASUREMENT VALUES

/S12

CALCULATE FREQUENCY DISTRIBUTION f FOR MEASUREMENT VALUES

/S13

ESTIMATE COEFFICIENT VECTOR h FROM VANDERMONDE MATRIX V ASSOCIATED WITH REPETITION COUNTS AND FREQUENCY DISTRIBUTION f

/S14

EXTRACT PRIMARY COMPONENT FROM COEFFICIENT VECTOR AND ESTIMATE COEFFICIENT VECTOR $h_1$

/S15

DEFINE GENERATOR ERROR $\delta L'$ FOR EACH QUANTUM GATE

/S16

COMBINE QUANTUM GATES INCLUDED IN QUANTUM GATE SEQUENCE a, SEQUENTIALLY STARTING FROM FIRST QUANTUM GATE

/S17

CALCULATE EIGENVALUES $a_j$ OF GENERATOR OF COMPOSITE QUANTUM GATE

/S18

ARE THERE DIFFERENT EIGENVALUES WHOSE $\exp(a_j)$ ARE EQUAL?

YES

NO

/S19

CALCULATE MATRIX REPRESENTING ACTION OF REPEATED EXECUTION, USING cml RELATED TO GENERATOR

/S20

CALCULATE MATRIX REPRESENTING ACTION OF REPEATED EXECUTION, ASSUMING 180-DEGREE ROTATION GATE

A

FIG. 12

A

S21

TRANSFORM INTO MATRIX C REPRESENTING ACTION IN SPACE OF
PROBABILITY DISTRIBUTIONS OF MEASUREMENT VALUES

S22

CALCULATE VECTOR b USING GENERATOR ERRORS $\delta L'$ OF NON-
EVALUATION TARGET QUANTUM GATES

S23

GENERATE OBJECTIVE FUNCTION F USING MATERIX C, VECTOR b, AND
COEFFICIENT VECTOR $h_1$

S24

CALCULATE VALUE OF PARAMETER v THAT MINIMIZES VALUE OF
OBJECTIVE FUNCTION F

S25

ESTIMATE GENERATOR ERRORS $\delta L'$ OF EVALUATION-TARGET
QUANTUM GATES ON THE BASIS OF VALUE OF PARAMETER v

S26

OUTPUT EVALUATION DATA REPRESENTING ESTIMATED GENERATOR
ERRORS $\delta L'$

END

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20180330265
- WO 2019064057 A
- US 20190220497
- JP 2021106013 A
- WO 2022073380 A
- WO 2023089930 A
- US 20230205840

**Non-patent literature cited in the description**

- Reliable Characterization for Improving and Validating Accurate Quantum Operations. **TAKANORI SUGIYAMA et al.** ARXIV.ORG. CORNELL UNIVERSITY LIBRARY, 30 December 2020
- Near-Term Quantum Computing Techniques: Variational Quantum Algorithms, Error Mitigation, Circuit Compilation, Benchmarking and Classical Simulation. **HE-LIANG HUANG et al.** ARXIV.ORG. CORNELL UNIVERSITY LIBRARY, 27 December 2022
- **ERIK NIELSEN** ; **JOHN KING GAMBLE** ; **KENNETH RUDINGER** ; **TRAVIS SCHOLTEN** ; **KEVIN YOUNG** ; **ROBIN BLUME-KOHOUT**. Gate Set Tomography. *the open journal for quantum science*, October 2021, vol. 5, 557
- **NEEREJA SUNDARESAN** ; **ISAAC LAUER** ; **EMILY PRITCHETT** ; **EASWAR MAGESAN** ; **PETAR JURCEVIC** ; **JAY M. GAMBETTA**. Reducing Unitary and Spectator Errors in Cross Resonance with Optimized Rotary Echoes. *PRX Quantum of the American Physical Society*, December 2020, vol. 1, 020318
- **GABRIEL O. SAMACH** ; **AMI GREENE** ; **JOHANNES BORREGAARD** ; **MATTHIAS CHRISTANDL** ; **JOSEPH BARRETO** ; **DAVID K. KIM** ; **CHRISTOPHER M. MCNALLY** ; **ALEXANDER MELVILLE** ; **BETHANY M. NIEDZIELSKI** ; **YOUNG-KYU SUNG**. Lindblad Tomography of a Superconducting Quantum Processor. *Physical Review Applied of the American Physical Society*, December 2022, vol. 18, 064056
- **YANWU GU** ; **RAJESH MISHRA** ; **BERTHOLD-GEORG ENGLERT** ; **HUI KHOON NG**. Randomized Linear Gate-Set Tomography. *PRX Quantum of the American Physical Society*, August 2021, vol. 2, 030328